(19) Europäisches Patentamt / European Patent Office / Office européen des brevets

(11) **EP 3 015 506 A1**

(12) **EUROPEAN PATENT APPLICATION**
published in accordance with Art. 153(4) EPC

(43) Date of publication:
**04.05.2016 Bulletin 2016/18**

(51) Int Cl.:
*C08L 27/16* (2006.01)  *B01D 69/06* (2006.01)
*B01D 69/08* (2006.01)  *B01D 71/34* (2006.01)
*B01D 71/38* (2006.01)  *C08J 9/28* (2006.01)
*C08L 27/18* (2006.01)  *C08L 29/04* (2006.01)

(21) Application number: **14818785.9**

(22) Date of filing: **25.06.2014**

(86) International application number:
**PCT/JP2014/066827**

(87) International publication number:
**WO 2014/208592 (31.12.2014 Gazette 2014/53)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.06.2013 JP 2013134336**

(71) Applicant: **Daikin Industries, Ltd.**
**Osaka-shi, Osaka 530-8323 (JP)**

(72) Inventors:
• **OHMUKAI Yoshikage**
**Osaka-shi**
**Osaka 530-8323 (JP)**
• **ASANO Kazuya**
**Osaka-shi**
**Osaka 530-8323 (JP)**
• **SHIOTANI Yuko**
**Osaka-shi**
**Osaka 530-8323 (JP)**

• **TANAKA Yoshito**
**Osaka-shi**
**Osaka 530-8323 (JP)**
• **FUJISAWA Manabu**
**Osaka-shi**
**Osaka 530-8323 (JP)**
• **ICHIKAWA Kenji**
**Osaka-shi**
**Osaka 530-8323 (JP)**
• **KITAHARA Takahiro**
**Osaka-shi**
**Osaka 530-8323 (JP)**
• **MIKI Jun**
**Osaka-shi**
**Osaka 530-8323 (JP)**

(74) Representative: **Hoffmann Eitle**
**Patent- und Rechtsanwälte PartmbB**
**Arabellastraße 30**
**81925 München (DE)**

(54) **COMPOSITION, POROUS POLYMER MEMBRANE AND HYDROPHILIC AGENT**

(57) The present invention aims to provide a composition having excellent hydrophilicity, water permeability, mechanical strength, chemical durability, and low-fouling property, and capable of producing a porous polymer membrane from which a hydrophilic agent is less likely to be eluted. The composition of the present invention includes a vinylidene fluoride resin and a copolymer (A) including a vinyl alcohol unit and a fluoromonomer unit.

**EP 3 015 506 A1**

**Description**

TECHNICAL FIELD

The present invention relates to a composition, a porous polymer membrane, and a hydrophilic agent.

BACKGROUND ART

Porous polymer membranes comprising a vinylidene fluoride resin are known as porous polymer membranes used in the water treatment field. Vinylidene fluoride resin is hydrophobic, and thus the researchers have tried to improve the water permeability and the fouling resistance by improving the affinity with water.

Known methods for improving the affinity with water include crosslink-bonding of a hydrophilic polymer to the surface of a porous membrane, adhesion of a hydrophilic polymer to the surface of a porous membrane, adsorption of a hydrophilic group-containing compound to the surface of a porous membrane, and modification of the surface of a porous membrane by corona discharge treatment or plasma discharge treatment. Such methods of treating the surface of a porous membrane still have a difficulty in hydrophilization of the inside of a porous membrane. Further, methods such as bonding a hydrophilic polymer to the surface cause a small pore size of a porous membrane. Although the methods of modifying the surface by corona discharge treatment or plasma discharge treatment have no influence on the pore size of a porous membrane, such methods then cause a reduction in strength of the porous membrane.

Another method of improving the affinity of a porous polymer membrane with water is known in which a hydrophilic polymer is added as a hydrophilic agent to a vinylidene fluoride resin and then the vinylidene fluoride resin is used as a porous polymer membrane.

For example, Patent Literature 1 discloses a vinylidene fluoride resin porous membrane comprising a polymer blend of 90 to 99% by weight of a vinylidene fluoride resin and 1 to 10% by weight of hydrophilic resin. Examples of the hydrophilic resin include vinylpyrrolidone resin, polyvinyl alcohol, saponified products of ethylenevinyl acetate copolymers, polyethylene glycol, polyglycol monoesters, polyethylene glycol-polypropylene glycol copolymers, polyacrylic acid, polymethacrylic acid, polystyrene sulfonic acid, cellulose derivatives, and polysorbates.

Patent Literature 2 discloses a hollow fiber membrane comprising thermoplastic resin which is a laminate of a three-dimensional network structure layer and a spherical structure layer, the three-dimensional network structure layer comprising a mixture of polyvinylidene fluoride and a hydrophilic polymer. Examples of the hydrophilic polymer include those having at least one selected from the group consisting of cellulose esters, fatty acid vinyl esters, vinylpyrrolidone, ethylene oxide, propylene oxide, acrylonitrile, acrylic acid esters, and methacrylic acid esters as a molecular unit in the main chain and/or a side chain.

Patent Literature 3 discloses a separation membrane comprising a separating layer, the separating layer containing polyvinylidene fluoride resin having a melt viscosity of 3300 Pa·s or higher and the separating layer having a three-dimensional network structure. The literature also discloses a separation membrane wherein the separating layer further contains a hydrophilic polymer selected from polyvinylpyrrolidone resin, acrylic resin, and cellulose ester resin.

CITATION LIST

- Patent Literature

Patent Literature 1: WO 2008/018181
Patent Literature 2: WO 2009/119373
Patent Literature 3: WO 2010/032808

SUMMARY OF INVENTION

- Technical Problem

Conventional hydrophilic agents are poor in compatibility with a vinylidene fluoride resin and are easily dissolved in water. Thus, when a porous polymer membrane is continually used in water treatment for a long time, a hydrophilic polymer is gradually eluted from the porous membrane. Further, conventional hydrophilic agents are poor in chemical durability. This causes deterioration of porous polymer membranes. In addition, such hydrophilic agents have an insufficient effect of preventing fouling on the porous polymer membrane.

In consideration of the above situation, the present invention aims to provide a composition having excellent hydrophilicity, water permeability, mechanical strength, chemical durability, and low-fouling property, and capable of producing a porous polymer membrane from which a hydrophilic agent is less likely to be eluted.

The present invention also aims to provide a porous polymer membrane which has excellent hydrophilicity, water permeability, mechanical strength, chemical durability, and low-fouling property and from which a hydrophilic agent is less likely to be eluted.

The present invention also aims to provide a hydrophilic agent which is excellent in chemical durability, which gives excellent hydrophilicity, water permeability, mechanical strength, chemical durability, and low-fouling property to a porous polymer membrane comprising a vinylidene fluoride resin, and which is less likely to be eluted from a porous polymer membrane.

- Solution to Problem

The present inventors have eagerly studied to find that use of a copolymer comprising a vinyl alcohol unit and a fluoromonomer unit as a hydrophilic agent can solve at once the above problems that conventional porous polymer membranes comprising a vinylidene fluoride resin have. Thereby, the present inventors have completed the present invention.

Specifically, the present invention relates to a composition comprising a vinylidene fluoride resin and a copolymer (A) including a vinyl alcohol unit and a fluoromonomer unit.

The copolymer (A) preferably satisfies a ratio by mole between the vinyl alcohol unit and the fluoromonomer unit (vinyl alcohol unit/fluoromonomer unit) of 25 to 75/75 to 25.

A ratio by mass between the vinylidene fluoride resin and the copolymer (A) is preferably 70/30 to 99/1.

The present invention also relates to a porous polymer membrane comprising the above composition.

The porous polymer membrane of the present invention preferably satisfies that the proportion of the copolymer (A) relative to the total mass of the vinylidene fluoride resin and the copolymer (A) on the membrane surface is 10% by mass or more higher than the proportion of the copolymer (A) relative to the total mass of the vinylidene fluoride resin and the copolymer (A) in the whole membrane, where the proportion of the copolymer (A) on the membrane surface is determined by X-ray photoelectron spectroscopy (XPS).

The porous polymer membrane of the present invention is preferably produced by nonsolvent-induced phase separation, thermally induced phase separation, or combination of both.

The porous polymer membrane of the present invention is preferably a flat membrane or a hollow fiber membrane.

The porous polymer membrane of the present invention is preferably intended to be used in water treatment.

The present invention also relates to a hydrophilic agent for a porous membrane that is formed from a vinylidene fluoride resin, the hydrophilic agent comprising a copolymer (A) including a vinyl alcohol unit and a fluoromonomer unit.

- Advantageous Effects of Invention

The composition of the present invention can provide a porous polymer membrane which has excellent hydrophilicity, water permeability, mechanical strength, chemical durability, and low-fouling property and from which a hydrophilic agent is less likely to be eluted.

The porous polymer membrane of the present invention has excellent hydrophilicity, water permeability, mechanical strength, chemical durability, and low-fouling property, and a hydrophilic agent is less likely to be eluted therefrom.

The hydrophilic agent of the present invention is excellent in chemical durability, gives excellent hydrophilicity, water permeability, mechanical strength, chemical durability, and low-fouling property to a porous polymer membrane comprising a vinylidene fluoride resin, and is less likely to be eluted from a porous polymer membrane.

DESCRIPTION OF EMBODIMENTS

The present invention will be described in detail hereinbelow.

The composition of the present invention comprises a vinylidene fluoride resin and a copolymer (A).

Although the reason therefor is unknown, a porous polymer membrane comprising the composition including a vinylidene fluoride resin and a copolymer (A) has high fouling resistance. Specifically, a smaller amount of a model substance of fouling such as bovine serum albumin (BSA, a model substance of protein fouling) or humic acid (a model substance of humic-matter fouling) is attached to the above membrane. The amount of such a substance attached can be determined by the quartz crystal microbalance (QCM) method. The influence of such attachment can also be evaluated by determining a reduction in coefficient of permeability when water containing a model substance of fouling is passed through the porous membrane comprising a composition including a vinylidene fluoride resin and a copolymer (A).

The porous polymer membrane comprising a composition including a vinylidene fluoride resin and a copolymer (A) is also excellent in hydrophilicity. The hydrophilicity can be evaluated by the contact angle in water. The contact angle in water is an indicator of wettability in water. The porous polymer membrane comprising a composition including a vinylidene fluoride resin and a copolymer (A) has a large contact angle in water, and is thus suitably used as a porous membrane to be used in water. The contact angle in water of the porous polymer membrane comprising a composition including a vinylidene fluoride resin and a copolymer (A) is preferably 60° or lower, more preferably 55° or lower, still more preferably 50° or lower. A porous membrane comprising a vinylidene fluoride resin usually shows a contact angle in water of about 70° and is high in hydrophobicity. This is presumably why such a porous membrane is easily fouled.

Further, hydrophilic agent polymers such as polyvinylpyrrolidone (PVP), polyacrylic acid, polyvinyl alcohol, and polyethylene glycol (PEG) are easily biodegraded. Thus, when used as a hydrophilic agent for water-treating membranes, such a polymer is disadvantageously degraded during the use of a water-treating membrane. On the contrary, the copolymer (A) is less likely to be biodegraded, and thus the above problem can be overcome.

The copolymer (A) includes a vinyl alcohol unit and a fluoromonomer unit.

In order to improve the chemical durability and the low-fouling property, the copolymer (A) preferably has an alternation rate between the vinyl alcohol unit and the fluoromonomer unit of 20% or higher. The alternation rate is more preferably 30% or higher, still more preferably 50% or higher, further more preferably 55% or higher, particularly preferably 60% or higher.

The alternation rate between the vinyl alcohol unit (-CH$_2$-CH(OH)-) and the fluoromonomer unit can be calculated as an alternation rate of three units by the following formula using a solvent such as hexadeuteroacetone capable of dissolving the copolymer (A) by $^1$H-NMR measurement on the copolymer (A).

$$\texttt{Alternation rate (\%) = C/(A + B + C) × 100}$$

A: number of V units bonded to two V units, for example, in the form of -V-V-V-
B: number of V units bonded to one V unit and one F unit, for example, in the form of -V-V-F-
C: number of V units bonded to two F units, for example, in the form of -F-V-F-
(F: fluoromonomer unit, V: vinyl alcohol unit)

The number of V units in each of A, B, and C is calculated from the intensity ratio of H in the main chain bonded to a tertiary carbon atom in the vinyl alcohol unit (-CH$_2$-CH(OH)-) in the $^1$H-NMR measurement.

The alternation rate is preferably 90% or lower. In such a case, the copolymer (A) has appropriate links of vinyl alcohol units in the molecule, so that the copolymer (A) has increased hydrophilicity.

In contrast, the alternation rate is also preferably 95% or higher. In such a case, the copolymer (A) has improved heat resistance.

The upper limit of the alternation rate is 100%.

Vinyl alcohol polymers are usually produced by a method of polymerizing a vinyl ester monomer represented by vinyl acetate, and then saponifying the resulting polymer. However, in the case of copolymerizing a fluoromonomer and vinyl acetate, for example, strong homopolymerization of the vinyl acetate occurs so that the vinyl acetate units are likely to form a chain. Thus, it is difficult to obtain a copolymer having a high alternation rate.

The present inventors have successfully obtained a copolymer having a high alternation rate between the vinyl alcohol unit and the fluoromonomer unit by adjusting the polymerization conditions as mentioned below. They have then found that use of such a copolymer having a high alternation rate as a hydrophilic agent gives excellent hydrophilicity, water permeability, mechanical strength, chemical durability, and low-fouling property to a porous polymer membrane comprising a vinylidene fluoride resin, and such a hydrophilic agent is less likely to be eluted from the porous polymer membrane. Thereby, the present inventors have completed the present invention. The composition of the present invention can provide a wide variety of porous polymer membranes, from porous polymer membranes for separating particles having a diameter of about 10 nm to porous polymer membranes for separating particles of micron order, by adjusting the membrane-forming conditions.

In the composition of the present invention, the ratio by mass between the vinylidene fluoride resin and the copolymer (A) (vinylidene fluoride resin/copolymer (A)) is preferably 70/30 to 99/1. Too small an amount of the copolymer (A) may cause poor hydrophilicity, a small amount of water permeated, and deteriorated fouling resistance. Too large an amount of the copolymer (A) may cause poor mechanical strength. The lower limit of the ratio by mass of the copolymer (A) is more preferably 95/5, still more preferably 90/10. The upper limit of the ratio by mass of the copolymer (A) is more preferably 75/25.

In the copolymer (A), the ratio by mole of vinyl alcohol unit/fluoromonomer unit is preferably 25 to 75/75 to 25. If the ratio by mole between the vinyl alcohol unit and the fluoromonomer unit is beyond the above range, a vinyl alcohol/fluoromonomer copolymer having a high alternation rate may not be obtained. Too large an amount of the vinyl alcohol unit may cause elution when the resulting porous membrane is brought into contact with hot water, and may cause a failure in achieving a sufficient mechanical strength. Too small an amount of the vinyl alcohol unit may cause poor hydrophilicity, and may cause a failure in achieving sufficient water permeability and fouling resistance. The ratio by mole of vinyl alcohol unit/fluoromonomer unit in the copolymer (A) is more preferably 33 to 60/67 to 40, still more preferably 38 to 60/62 to 40.

In order to increase the alternation rate, the copolymer (A) is preferably a vinyl alcohol/fluoromonomer copolymer consisting essentially of a vinyl alcohol unit and a fluoromonomer unit.

The fluoromonomer is preferably at least one selected from the group consisting of tetrafluoroethylene (TFE), hexafluoropropylene (HFP), chlorotrifluoroethylene (CTFE), vinyl fluoride, trifluoroethylene, fluoroalkyl vinyl ethers, fluoroalkyl ethylenes, trifluoropropylene, pentafluoropropylene, trifluorobutene, tetrafluoroisobutene, hexafluoroisobutene, and fluoromonomers represented by $CH_2$=CFRf (wherein Rf is a C1-C12 linear or branched fluoroalkyl group), more preferably at least one selected from the group consisting of TFE, CTFE, and HFP, still more preferably TFE.

The copolymer (A) may include monomer units other than the vinyl alcohol unit and the fluoromonomer unit unless such other monomer units deteriorate the present invention. Examples of the other monomer units include vinyl ester monomer units, vinyl ether monomer units, (meth)acrylic monomer units having polyethylene glycol in its side chain, vinyl monomer units having polyethylene glycol in its side chain, (meth)acrylic monomer units having a long-chain hydrocarbon group, and vinyl monomer units having a long-chain hydrocarbon group. The sum of the amounts of the other monomer units is preferably 0 to 50 mol%, more preferably 0 to 40 mol%, still more preferably 0 to 30 mol%.

The copolymer (A) may include a vinyl ester monomer unit. The copolymer (A) having a specific vinyl ester monomer unit such as vinyl acetate leads to a reduction in glass transition temperature, so that the toughness of the resulting porous polymer membrane is expected to be high. The copolymer (A) having a vinyl ester monomer unit can be produced by adjusting the degree of saponification in the case of producing the porous polymer membrane of the present invention by saponifying a copolymer having a vinyl ester monomer unit and a fluoromonomer unit. The saponification will be described later.

The weight average molecular weight of the copolymer (A) may vary in accordance with the application of the porous polymer membrane of the present invention. In order to achieve good mechanical strength and membrane formability, the weight average molecular weight is preferably 10000 or higher. It is more preferably 30000 to 2000000, still more preferably 50000 to 1000000. The weight average molecular weight can be determined by gel permeation chromatography (GPC).

The following will describe a method of producing the copolymer (A). The copolymer (A) is usually produced by copolymerizing a vinyl ester monomer such as vinyl acetate and a fluoromonomer, and then saponifying the resulting copolymer. In order to make the alternation rate of the copolymer (A) 20% or higher, the polymerization is preferably performed under conditions that can keep the compositional ratio between the vinyl ester monomer and the fluoromonomer substantially constant. In other words, the copolymer (A) is preferably produced by a method comprising the steps of: polymerizing a vinyl ester monomer and a fluoromonomer under conditions that can keep the compositional ratio therebetween substantially constant to provide a copolymer including the vinyl ester monomer unit and the fluoromonomer unit; and saponifying the resulting copolymer to provide a copolymer including a vinyl alcohol unit and a fluoromonomer unit.

In the polymerization of a vinyl ester monomer and a fluoromonomer, in general, strong homopolymerization of the vinyl ester monomer occurs so that the vinyl ester monomers are likely to form a chain. Thus, it is difficult to achieve a high alternation rate between the vinyl ester monomer and the fluoromonomer.

Examples of the vinyl ester monomer include vinyl formate, vinyl acetate, vinyl propionate, vinyl butyrate, vinyl isobutyrate, vinyl valerate, vinyl isovalerate, vinyl caproate, vinyl hepthylate, vinyl caprylate, vinyl pivalate, vinyl pelargonate, vinyl caprate, vinyl laurate, vinyl myristate, vinyl pentadecylate, vinyl palmitate, vinyl margarate, vinyl stearate, vinyl octylate, VeoVa-9 (SHOWA SHELL SEKIYU K. K.), VeoVa-10 (SHOWA SHELL SEKIYU K. K.), vinyl benzoate, and vinyl versatate. Preferably used among these are vinyl acetate, vinyl propionate, vinyl versatate, and vinyl stearate because they are easily available and inexpensive. These monomers may be used in admixture.

The vinyl ester monomer and the fluoromonomer may be copolymerized by solution polymerization, bulk polymerization, emulsion polymerization, suspension polymerization, or the like. Preferred is emulsion polymerization, solution polymerization, or suspension polymerization because these methods are industrially easy to perform, but the method is not limited thereto.

In emulsion polymerization, solution polymerization, or suspension polymerization, additives such as a polymerization initiator, a solvent, a chain-transfer agent, and a surfactant may be used, and they each may be a conventionally known one.

The solvent to be used in solution polymerization is preferably one dissolving the fluoromonomer and the vinyl ester monomer, as well as the copolymer (A), and examples thereof include esters such as butyl acetate, ethyl acetate, methyl acetate, and propyl acetate; ketones such as acetone, methyl ethyl ketone, and cyclohexanone; aliphatic hydrocarbons such as hexane, cyclohexane, and octane; aromatic hydrocarbons such as benzene, toluene, and xylene;

alcohols such as methanol, ethanol, tert-butanol, and isopropanol; cyclic ethers such as tetrahydrofuran and dioxane; fluorosolvents such as HCFC-225; dimethyl sulfoxide, dimethyl formamide, and any mixture thereof.

The solvent to be used in emulsion polymerization may be water or a solvent mixture of water and an alcohol, for example.

Examples of the polymerization initiator include oil-soluble radical polymerization initiators represented by peroxycarbonates such as diisopropyl peroxydicarbonate (IPP) and di-n-propyl peroxydicarbonate (NPP), and t-butyl peroxypivalate; and water-soluble radical polymerization initiators such as ammonium salts, potassium salts, and sodium salts of persulfuric acid, perboric acid, perchloric acid, perphosphoric acid, and percarbonic acid. In emulsion polymerization, ammonium persulfate or potassium persulfate is particularly preferred.

The surfactant may be any known surfactant, and examples thereof include nonionic surfactants, anionic surfactants, and cationic surfactants. The surfactant may be a fluorosurfactant.

Examples of the chain-transfer agent include hydrocarbons such as ethane, isopentane, n-hexane, and cyclohexane; aromatics such as toluene and xylene; ketones such as acetone; acetates such as ethyl acetate and butyl acetate; alcohols such as methanol and ethanol; mercaptans such as methyl mercaptan; and halogenated hydrocarbons such as carbon tetrachloride, chloroform, methylene chloride, and methyl chloride. The amount of a chain-transfer agent to be added may vary in accordance with the chain transfer constant of a compound to be used, and it is usually used in a range from 0.001 to 10% by mass relative to the polymerization solvent.

The polymerization temperature only needs to be within a range that can keep the compositional ratio between the vinyl ester monomer and the fluoromonomer substantially constant during the reaction. The polymerization temperature may be 0°C to 100°C.

The polymerization pressure only needs to be within a range that can keep the compositional ratio between the vinyl ester monomer and the fluoromonomer substantially constant during the reaction. The polymerization pressure may be 0 to 10 MPaG.

Saponification of an acetate group derived from vinyl acetate has been well known, and can be achieved by a conventionally known method such as alcoholysis or hydrolysis. This saponification converts the acetate group ($-OCOCH_3$) into a hydroxy group (-OH). Other vinyl ester monomers can also be saponified to have a hydroxy group by a conventionally known method.

In order to provide a porous polymer membrane having excellent water permeability and alkali resistance, the degree of saponification in saponifying a copolymer including a vinyl ester monomer unit and a fluoromonomer unit is preferably 50% or higher, more preferably 60% or higher, still more preferably 70% or higher.

The degree of saponification can be calculated by the following formula by IR measurement or $^1$H-NMR measurement on the copolymer (A).

$$\text{Degree of saponification (\%)} = D/(D + E) \times 100$$

D: number of vinyl alcohol units in copolymer (A)
E: number of vinyl ester monomer units in copolymer (A)

The copolymer (A) in the present invention can also be obtained by a step of copolymerizing a fluoromonomer and a vinyl ether monomer ($CH_2$=CH-OR) having a protecting group (R) which may be converted into vinyl alcohol by a deprotection reaction (hereinafter, simply referred to as a vinyl ether monomer) to provide a fluoromonomer/vinyl ether monomer copolymer, and a step of deprotecting the fluoromonomer/vinyl ether monomer copolymer to provide a fluoromonomer/vinyl alcohol copolymer.

The methods of copolymerizing a fluoromonomer and a vinyl ether monomer and methods of deprotecting the fluoromonomer/vinyl ether monomer copolymer have been well known, and conventionally known methods may be used also in the present invention. The deprotection reaction on the fluoromonomer/vinyl ether monomer copolymer converts, for example, an alkoxy group containing a protecting group R into a hydroxy group to provide a fluoromonomer/vinyl alcohol copolymer.

The fluoromonomer/vinyl ether monomer copolymer obtained by copolymerizing a fluoromonomer and a vinyl ether monomer satisfies a ratio by mole between the fluoromonomer unit and the vinyl ether monomer unit (fluoromonomer unit/vinyl ether monomer unit) of preferably (40 to 60)/(60 to 40), more preferably (45 to 55)/(55 to 45). When the mole ratio is within the above range and the degree of deprotection is within the range to be mentioned below, the copolymer (A) in which the mole ratio between the respective polymer units is within the above range can be produced.

The fluoromonomer/vinyl ether monomer copolymer is preferably deprotected such that the degree of deprotection is 1 to 100%, more preferably 30 to 100%.

The degree of deprotection can be determined by measuring, before and after the deprotection, the integral value of protons of a protecting group (e.g., $(CH_3)_3O-$) and the integral value of protons of a main chain methylene group ($-CH_2-CH-$) within the range of 0.8 to 1.8 ppm by $^1$H-NMR.

The vinyl ether monomer is preferably free from a fluorine atom. The vinyl ether monomer may be any monomer capable of being deprotected, and is preferably tert-butyl vinyl ether because tert-butyl vinyl ether is easily available.

The fluoromonomer and the vinyl ether monomer may be copolymerized by solution polymerization, bulk polymerization, emulsion polymerization, suspension polymerization, or the like. Preferred is emulsion polymerization, solution polymerization, or suspension polymerization because these methods are industrially easy to perform, but the method is not limited thereto.

In emulsion polymerization, solution polymerization, or suspension polymerization, additives such as a polymerization initiator, a solvent, a chain-transfer agent, and a surfactant may be used, and they each may be one usually used.

The solvent to be used in solution polymerization is preferably one dissolving a fluoroolefin and a vinyl ether monomer, as well as a fluorocopolymer to be synthesized, and examples thereof include esters such as n-butyl acetate, t-butyl acetate, ethyl acetate, methyl acetate, and propyl acetate; ketones such as acetone, methyl ethyl ketone, and cyclohexanone; aliphatic hydrocarbons such as hexane, cyclohexane, and octane; aromatic hydrocarbons such as benzene, toluene, and xylene; alcohols such as methanol, ethanol, tert-butanol, and isopropanol; cyclic ethers such as tetrahydrofuran and dioxane; fluorosolvents such as HCFC-225; dimethyl sulfoxide, dimethyl formamide, and any mixture thereof.

The solvent to be used in emulsion polymerization may be water or a solvent mixture of water and an alcohol, for example.

Examples of the polymerization initiator include oil-soluble radical polymerization initiators represented by peroxycarbonates such as diisopropyl peroxydicarbonate (IPP) and di-n-propyl peroxydicarbonate (NPP); and water-soluble radical polymerization initiators such as ammonium salts, potassium salts, and sodium salts of persulfuric acid, perboric acid, perchloric acid, perphosphoric acid, and percarbonic acid. In emulsion polymerization, ammonium persulfate or potassium persulfate is particularly preferred.

The surfactant may be any surfactant usually used, and examples thereof include nonionic surfactants, anionic surfactants, and cationic surfactants. The surfactant may be a fluorosurfactant.

Examples of the chain-transfer agent include hydrocarbons such as ethane, isopentane, n-hexane, and cyclohexane; aromatics such as toluene and xylene; ketones such as acetone; acetates such as ethyl acetate and butyl acetate; alcohols such as methanol and ethanol; mercaptans such as methyl mercaptan; and halogenated hydrocarbons such as carbon tetrachloride, chloroform, methylene chloride, and methyl chloride.

The amount of a chain-transfer agent to be added may vary in accordance with the chain transfer constant of a compound to be used, and it is usually used in a range from 0.001 to 10% by mass relative to the polymerization solvent.

The polymerization temperature only needs to be within a range that can keep the compositional ratio between the fluoromonomer and the vinyl ether monomer substantially constant during the reaction. The polymerization temperature may be 0°C to 100°C.

The polymerization pressure only needs to be within a range that can keep the compositional ratio between the fluoromonomer and the vinyl ether monomer substantially constant during the reaction. The polymerization pressure may be 0 to 10 MPaG.

The vinyl ether monomer can be deprotected by a conventionally known method utilizing acid, heat, or light, for example. This deprotection converts the leaving group (e.g., $-C(CH_3)_3$) into hydrogen, so that a hydroxy group can be formed.

When the copolymer including a fluoromonomer unit and a vinyl ether monomer unit is deprotected to provide the copolymer (A) in the present invention, the degree of deprotection only needs to be within a range that allows the proportions of the respective monomer units of the copolymer (A) in the present invention to be within the aforementioned range. Specifically, the degree of deprotection is preferably 50% or higher, more preferably 60% or higher, still more preferably 70% or higher.

The degree of deprotection can be calculated by the following formula by IR measurement or the aforementioned $^1$H-NMR measurement on the fluorocopolymer.

$$\text{Degree of deprotection (\%)} = D/(D + E) \times 100$$

D: number of vinyl alcohol units in copolymer (A)
E: number of vinyl ether monomer units in copolymer (A)

The vinylidene fluoride resin is a resin comprising polyvinylidene fluoride or a copolymer including a vinylidene fluoride unit.

In order to give good mechanical strength and processability to the porous polymer membrane, the weight average molecular weight of the polyvinylidene fluoride is preferably 30000 to 2000000, more preferably 50000 to 1000000.

Examples of the copolymer including a vinylidene fluoride unit include vinylidene fluoride/tetrafluoroethylene copolymers and vinylidene fluoride/hexafluoropropylene copolymers. In order to achieve good mechanical strength and alkali resistance, the copolymer including a vinylidene fluoride unit is particularly preferably a vinylidene fluoride/tetrafluoroethylene copolymer.

In order to achieve good membrane formability and alkali resistance, the vinylidene fluoride/tetrafluoroethylene copolymer preferably satisfies a ratio by mole between the vinylidene fluoride unit and the tetrafluoroethylene unit (vinylidene fluoride unit/tetrafluoroethylene unit) of 50 to 99/50 to 1. Examples of such a polymer include NEOFLON series VT50, VP50, VT100, VP100, VP101, and VP100X (DAIKIN INDUSTRIES, Ltd.). The ratio by mole between the vinylidene fluoride unit and the tetrafluoroethylene unit in the vinylidene fluoride/tetrafluoroethylene copolymer is more preferably 50 to 95/50 to 5, still more preferably 50 to 90/50 to 10. In addition to the vinylidene fluoride/tetrafluoroethylene copolymer consisting only of a vinylidene fluoride unit and a tetrafluoroethylene unit, the vinylidene fluoride/tetrafluoroethylene copolymer may be a ternary or higher copolymer having not only a vinylidene fluoride unit and a tetrafluoroethylene unit but also any other units such as a hexafluoropropylene unit, a chlorotrifluoroethylene unit, and a perfluorovinyl ether unit to the extent that these units do not deteriorate the characteristics.

The weight average molecular weight of the copolymer including a vinylidene fluoride unit varies in accordance with the application of the resulting porous polymer membrane. In order to achieve good mechanical strength and membrane formability, the weight average molecular weight thereof is preferably 10000 or more. It is more preferably 30000 to 2000000, still more preferably 50000 to 1000000, particularly preferably 100000 to 800000. The weight average molecular weight can be determined by gel permeation chromatography (GPC).

The composition of the present invention may consist only of the vinylidene fluoride resin and the copolymer (A) as constitutional polymers, or may comprise, in addition to the vinylidene fluoride resin and the copolymer (A), a resin other than the vinylidene fluoride resin and the copolymer (A) as a constitutional polymer.

Examples of the resin other than the vinylidene fluoride resin and the copolymer (A) include polyethylene resin, polypropylene resin, acrylic resin, polyacrylonitrile, acrylonitrile-butadiene-styrene (ABS) resin, polystyrene resin, acrylonitrile-styrene (AS) resin, vinyl chloride resin, polyethylene terephthalate, polyamide resin, polyacetal resin, polycarbonate resin, modified polyphenylene ether resin, polyphenylene sulfide resin, polyamide imide resin, polyether imide resin, polysulfone resin, polyether sulfone resin, and mixtures and copolymers thereof. Resin miscible with these resins may also be mixed.

The resin other than the vinylidene fluoride resin and the copolymer (A) preferably comprises at least one selected from the group consisting of polyethylene resin, polypropylene resin, and acrylic resin.

The polyethylene resin is a resin comprising an ethylene homopolymer or an ethylene copolymer. The polyethylene resin may comprise multiple ethylene copolymers. Examples of the ethylene copolymer include copolymers of ethylene and at least one selected from unsaturated linear hydrocarbons such as propylene, butene, and pentene.

The polypropylene resin is a resin comprising a propylene homopolymer or a propylene copolymer. The polypropylene resin may comprise multiple propylene copolymers. Examples of the propylene copolymer include copolymers of propylene and at least one selected from the group consisting of unsaturated linear hydrocarbons such as ethylene, butene, and pentene.

The acrylic resin is a polymeric compound mainly containing acrylic acid, methacrylic acid or a derivative thereof, such as a polymer of acrylamide or acrylonitrile. Particularly preferred are acrylate resin and methacrylate resin.

The resin other than the vinylidene fluoride resin and the copolymer (A) is most preferably acrylic resin.

The characteristics of the resulting porous polymer membrane such as membrane strength, water permeability, and the blocking performance can be adjusted by adjusting the type and the amount of the resin other than the vinylidene fluoride resin and the copolymer (A).

In order to achieve hydrophilization, to control phase separation, and to improve the mechanical strength, the composition of the present invention may further contain additives such as polyvinylpyrrolidone, polymethyl methacrylate resin, polyethylene glycol, montmorillonite, $SiO_2$, $TiO_2$, $CaCO_3$, and polytetrafluoroethylene.

The composition of the present invention may contain a solvent. Examples of the solvent include middle-chain-length alkyl ketones, esters, glycol esters, and organic carbonates such as cyclohexanone, isophorone, $\gamma$-butyrolactone, methyl isoamyl ketone, dimethyl phthalate, diethyl phthalate, dibutyl phthalate, aliphatic polyhydric alcohols, propylene glycol methyl ether, propylene carbonate, diacetone alcohol, and glycerol triacetate, fluorosolvents such as HFC-365 and HCFC-225, and lower alkyl ketones, esters, and amides such as diphenyl carbonate, methyl benzoate, diethylene glycol ethyl acetate, benzophenone, N-methyl-2-pyrrolidone, dimethyl sulfoxide, dimethyl acetamide, dimethyl formamide, methyl ethyl ketone, acetone, methanol, tetrahydrofuran, tetramethylurea, and trimethyl phosphate.

The composition of the present invention may contain a nonsolvent. Examples of the nonsolvent include water, aliphatic hydrocarbons, aromatic hydrocarbons, aromatic polyhydric alcohols, chlorinated hydrocarbons, and other chlorinated organic liquids such as hexane, pentane, benzene, toluene, carbon tetrachloride, o-dichlorobenzene, trichloroethylene, ethylene glycol, diethylene glycol, triethylene glycol, tetraethylene glycol, propylene glycol, butylene glycol, pentane diol, hexane diol, methanol, ethanol, propanol, and low molecular weight polyethylene glycol, and solvent mixtures thereof.

The composition of the present invention preferably contains the vinylidene fluoride resin, the copolymer (A), and a good solvent. Examples of the good solvent include fluorosolvents such as HCFC-225, lower alkyl ketones, esters, and amides such as N-methyl-2-pyrrolidone, dimethyl sulfoxide, dimethyl acetamide, dimethyl formamide, methyl ethyl ketone, acetone, tetrahydrofuran, tetramethylurea, and trimethyl phosphate, and solvent mixtures thereof.

In the composition of the present invention, the sum of the amounts of the vinylidene fluoride resin and the copolymer (A) is preferably 5 to 60% by mass of the composition. The lower limit thereof is more preferably 10% by mass and the upper limit thereof is more preferably 50% by mass.

The composition of the present invention is useful as a composition for porous polymer membranes. Use of the composition of the present invention in production of a porous polymer membrane is also one aspect of the present invention.

The present invention also relates to a porous polymer membrane comprising the above composition.

The porous polymer membrane of the present invention has a pore size of preferably 2 nm to 2.0 $\mu$m, more preferably 5 nm to 0.5 $\mu$m. Too small a pore size may cause insufficient permeability of gas or liquid, whereas too large a pore size may cause poor blocking performance, or poor mechanical strength, resulting in easy breakage.

The pore size is determined as follows: the surface of a porous polymer membrane is photographed using, for example, SEM at a magnification that allows clear observation of the pores, and the diameters of the pores are measured. In the case of elliptical pores, the diameter of each pore is determined by $(a \times b) \times 0.5$, wherein "a" represents the length of the minor axis and "b" represents the length of the major axis. Also, the pore size can roughly be determined from the particle blocking rate. For example, a porous membrane that can block 95% or more of 50-nm polystyrene particles is considered to have a pore size of 50 nm or smaller.

For the porous polymer membrane of the present invention capable of blocking 95% or more of 50-nm particles, for example, the coefficient of pure water permeability thereof is preferably $1.5 \times 10^{-10}$ m$^3$/m$^2$/s/Pa or higher, more preferably $3.0 \times 10^{-10}$ m$^3$/m$^2$/s/Pa or higher. The upper limit of the coefficient of pure water permeability is not particularly limited, and it is preferably as high as possible within a range that allows the target blocking rate and strength to be maintained.

The coefficient of pure water permeability can be determined by filtering ion exchange water through a hollow fiber membrane or flat membrane produced at a temperature of 25°C under, if necessary, a pressure of 0.01 MPa or higher with a pump or nitrogen. Specifically, the coefficient can be determined by the following formula.

$$\text{Coefficient of pure water permeability } [\text{m}^3/\text{m}^2/\text{s/Pa}] = \\ (\text{amount of water permeated})/(\text{area of membrane})/(\text{time for} \\ \text{permeation})/(\text{evaluation pressure})$$

The porous polymer membrane of the present invention has a 100-nm or 50-nm particle blocking rate of preferably 90% or higher, more preferably 95% or higher.

The particle blocking rate can be determined as follows: polystyrene latex particles having a controlled particle size are diluted to about 100 ppm with ion exchange water, and the resulting dispersed solution is filtered as an evaluation liquid. The value can be determined by the following formula.

$$\text{Particle blocking rate (\%)} = ((\text{absorbance of} \\ \text{unfiltered evaluation liquid}) - (\text{absorbance of liquid} \\ \text{permeated}))/(\text{absorbance of unfiltered evaluation liquid}) \times \\ 100$$

The porous polymer membrane of the present invention is also excellent in hydrophilicity. The hydrophilicity can be evaluated by the contact angle in water. The contact angle in water is a standard of wettability in water. The porous polymer membrane of the present invention has a large contact angle in water, and thus is suitably used as a porous membrane to be used in water. The porous polymer membrane of the present invention has a contact angle in water of preferably 60° or smaller. The contact angle is more preferably 55° or smaller, still more preferably 50° or smaller. A porous polymer membrane comprising vinylidene fluoride usually has a contact angle in water of about 70°, and thus is highly hydrophobic. This is presumably why such a porous membrane is easily fouled.

In order to achieve good mechanical strength, the porous polymer membrane of the present invention has a breaking strength at maximum point of preferably 1.0 MPa or higher, more preferably 2.0 MPa or higher.

The breaking strength at maximum point can be determined by measuring the breaking strength of a sample piece at a chuck-to-chuck distance of 50 mm and a tensile rate of 200 mm/min, with the cross-sectional area before the tensile test being used as a unit measurement area. Alternatively, the breaking strength at maximum point can also be determined by measuring the breaking strength of a sample piece at a chuck-to-chuck distance of 25 mm and a tensile rate of 50 mm/min, with the cross-sectional area before the tensile test being used as a unit measurement area. The direction of stretching a test piece is the extrusion direction for hollow fiber membranes or the casting direction for flat membranes.

In order to achieve good toughness, the porous polymer membrane of the present invention has an elongation at maximum point of preferably 90% or higher, more preferably 200% or higher.

The elongation at maximum point can be determined as follows: the breaking strength of a test piece is measured at a chuck-to-chuck distance of 50 mm and a tensile rate of 200 mm/min, and the elongation percentage at the maximum point is determined as the elongation at maximum point on the basis of the value at a chuck-to-chuck distance of 50 mm. Alternatively, the elongation at maximum point can also be determined as follows: the breaking strength of a test piece is measured at a chuck-to-chuck distance of 25 mm and a tensile rate of 50 mm/min, and the elongation percentage at the maximum point is determined as the elongation at maximum point on the basis of the value at a chuck-to-chuck distance of 25 mm. The direction of stretching a test piece is the extrusion direction for hollow fiber membranes or the casting direction for flat membranes.

The porous polymer membrane of the present invention may have any structure. For example, the porous polymer membrane may have a three-dimensional network structure in which solids spread three-dimensionally in the form of network, or a spherical structure in which many spherical or substantially spherical solids are bonded directly or via linear solids. The porous polymer membrane may have both of these structures.

The porous polymer membrane of the present invention is preferably in the form of a flat membrane or a hollow fiber membrane.

The porous polymer membrane of the present invention in the form of a flat membrane may be a composite membrane comprising a fluoropolymer layer of the copolymer (A) and a porous base. In the case of a composite membrane, the surface of a porous base may be covered with a fluoropolymer layer of the copolymer (A), or a porous base and a fluoropolymer layer of the copolymer (A) are laminated with each other. Alternatively, the composite membrane may comprise a porous base, a fluoropolymer layer, and a resin layer of a resin other than the copolymer (A). The resin constituting the resin layer may be any of the aforementioned thermoplastic resins.

Examples of the porous base include woven fabric, knitted fabric, and nonwoven fabric made of organic fiber such as polyester fiber, nylon fiber, polyurethane fiber, acrylic fiber, rayon fiber, cotton, and silk. In addition, woven fabric, knitted fabric, and nonwoven fabric made of inorganic fiber such as glass fiber and metal fiber may also be used. In order to achieve good elasticity and to reduce cost, a porous base made of organic fiber is preferred.

The pore size on the surface of the porous base may freely be selected in accordance with the application, and it is preferably 5 nm to 100 $\mu$m, more preferably 8 nm to 10 $\mu$m.

The porous polymer membrane in the form of a flat membrane has a thickness of preferably 10 $\mu$m to 2 mm, more preferably 30 $\mu$m to 500 $\mu$m. Even in the case of a composite membrane comprising the above porous base, the thickness of the porous polymer membrane is preferably within the above range.

In order to increase the amount of water treated per unit area and unit volume, the porous polymer membrane of the present invention is more preferably in the form of a hollow fiber membrane.

In the case of a hollow fiber membrane, the inner diameter thereof is preferably 100 $\mu$m to 10 mm, more preferably 150 $\mu$m to 8 mm. The outer diameter of the hollow fiber membrane is preferably 120 $\mu$m to 15 mm, more preferably 200 $\mu$m to 12 mm.

The porous polymer membrane in the form of a hollow fiber membrane has a thickness of preferably 20 $\mu$m to 3 mm, more preferably 50 $\mu$m to 2 mm. The pore sizes on the inner and outer surfaces of the hollow fiber membrane can freely be selected in accordance with the application, and they each are within a range of preferably 2 nm to 2.0 $\mu$m, more preferably 5 nm to 0.5 $\mu$m.

For the porous polymer membrane of the present invention, the proportion of the copolymer (A) relative to the sum of the masses of the vinylidene fluoride resin and the copolymer (A) on the surface of the membrane determined by X-ray photoelectron spectroscopy (XPS) is 10% by mass or more higher than the proportion of the copolymer (A) relative to the sum of the masses of the vinylidene fluoride resin and the copolymer (A) in the whole membrane. In other words, the copolymer (A) is preferably segregated on the surface of the membrane in the porous polymer membrane of the present invention. This value is herein referred to as a surface migration. The surface migration is more preferably 20% or higher, still more preferably 30% or higher. The upper limit thereof is not particularly limited.

The porous polymer membrane of the present invention can be produced by any of various methods. Examples thereof include phase separation, melt extraction, vapor solidification, stretching, etching, sintering of a polymer sheet into a porous membrane, crushing of a bubble-containing polymer sheet into a porous membrane, and electrospinning.

The melt extraction is a method of forming a porous structure by melt-kneading inorganic particles and organic liquid matter with a mixture; extrusion-molding the kneaded matter through a die or molding it with a press at a temperature not lower than the melting points of the vinylidene fluoride resin and the copolymer (A); cooling and solidifying the molded article; and then extracting the organic liquid matter and the inorganic particles.

The vapor solidification is a method of forcedly supplying saturated vapor or vapor containing mist of one or both of a nonsolvent and a poor solvent which are compatible with a good solvent and do not dissolve the vinylidene fluoride resin and the copolymer (A) for at least one surface of a membrane-like article formed from a composition prepared by dissolving the vinylidene fluoride resin and the copolymer (A) in a good solvent.

The method of producing the porous polymer membrane of the present invention is preferably phase separation because the pore size is easily controlled. Examples of the phase separation include thermally induced phase separation (TIPS) and nonsolvent-induced phase separation (NIPS).

In the case of thermally induced phase separation, the porous polymer membrane of the present invention can be produced by a method including a step of dissolving the vinylidene fluoride resin and the copolymer (A) in a solvent that is a poor solvent or a good solvent at a relatively high temperature to provide a composition, and a step of cooling and solidifying the composition.

The composition prepared by dissolving the vinylidene fluoride resin and the copolymer (A) in a solvent is in the form of a uniform single-phase liquid when it is maintained at a temperature higher than what is called a cloud point. In contrast, phase separation occurs at a temperature not higher than the cloud point so that the composition is separated into two phases, i.e., a polymer-rich phase and a solvent-rich phase. When the temperature reaches the crystallization temperature or lower, the polymer matrix is immobilized, so that a porous membrane is formed.

In the case of thermally induced phase separation, the sum of the amounts of the vinylidene fluoride resin and the copolymer (A) in the composition is preferably 10 to 60% by mass relative to the sum of the amounts of the vinylidene fluoride resin, the copolymer (A), and the solvent. It is more preferably 15 to 50% by mass.

The viscosity of the composition can be adjusted within an appropriate range by adjusting the concentration of the vinylidene fluoride resin and the copolymer (A) within an appropriate range. If the viscosity of the composition is beyond an appropriate range, the porous polymer membrane may not be formed.

The poor solvent is a solvent that is not capable of dissolving 5% by mass or more of the vinylidene fluoride resin and the copolymer (A) at a temperature lower than 60°C but capable of dissolving 5% by mass or more thereof at a temperature of 60°C or higher and not higher than the melting points of the resins. In contrast to the poor solvent, a solvent that is capable of dissolving 5% by mass or more of the resins even at a temperature lower than 60°C is called a good solvent. A solvent that neither dissolves nor swells the resins until the temperature reaches the melting points of the resins or the boiling point of the liquid is called a nonsolvent.

Examples of the poor solvent include middle-chain-length alkyl ketones, esters, glycol esters and organic carbonates such as cyclohexanone, isophorone, γ-butyrolactone, methyl isoamyl ketone, dimethyl phthalate, diethyl phthalate, dibutyl phthalate, aliphatic polyhydric alcohols, propylene glycol methyl ether, propylene carbonate, diacetone alcohol, and glycerol triacetate, and solvent mixtures thereof. Fluorosolvents such as HFC-365, diphenyl carbonate, methyl benzoate, diethylene glycol ethyl acetate, or benzophenone may also be used. Even with respect to a solvent mixture of a nonsolvent and a poor solvent, a solvent that satisfies the definition of a poor solvent is defined as a poor solvent.

In the case of thermally induced phase separation, a solvent for the composition is preferably, but not limited to, a poor solvent. As a result of examining the behavior of phase separation of a fluoropolymer, a good solvent may be used in some cases.

Examples of the good solvent include fluorosolvents such as HCFC-225, lower alkyl ketones, esters, and amides such as N-methyl-2-pyrrolidone, dimethyl sulfoxide, dimethyl acetamide, dimethyl formamide, methyl ethyl ketone, acetone, methanol, tetrahydrofuran, tetramethylurea, and trimethyl phosphate, and solvent mixtures thereof.

Examples of the nonsolvent include water, aliphatic hydrocarbons, aromatic hydrocarbons, aromatic polyhydric alcohols, and chlorinated hydrocarbons or other chlorinated organic liquids such as hexane, pentane, benzene, toluene, carbon tetrachloride, o-dichlorobenzene, trichloroethylene, ethylene glycol, diethylene glycol, triethylene glycol, tetraethylene glycol, propylene glycol, butylene glycol, pentane diol, hexane diol, methanol, ethanol, propanol, and low molecular weight polyethylene glycol, and solvent mixtures thereof.

In the case of thermally induced phase separation, the step of providing a composition is preferably a step of dissolving the vinylidene fluoride resin and the copolymer (A) in a solvent that is a poor solvent or a good solvent at 20°C to 270°C. The dissolving temperature is preferably 30°C to 250°C. When dissolved at a relatively high temperature, the vinylidene fluoride resin and the copolymer (A) can be at a high concentration. This enables production of a porous polymer membrane having high mechanical strength. If the concentration of the vinylidene fluoride resin and the copolymer (A) is too high, the resulting porous polymer membrane may have a low porosity, resulting in poor water permeability.

If the viscosity of the prepared composition is beyond an appropriate range, a porous membrane may not be formed.

The composition is preferably cooled and solidified by a method of ejecting the composition into a cooling bath through a die, for example. For the porous polymer membrane in the form of a flat membrane, a method of casting and immersing the composition in a cooling bath is also one preferable method.

Those to be used as a cooling liquid for the cooling bath have a temperature lower than that of the composition. Examples thereof include a liquid containing a solvent that is a poor solvent or a good solvent at a temperature of 0°C to 80°C and a concentration of 60 to 100% by mass. The cooling liquid may be a nonsolvent or a nonsolvent containing a poor solvent or a good solvent.

In the production of the porous polymer membrane of the present invention, important features are the concentration of the composition, the constitution of the solvent that dissolves the fluoropolymer, and the constitution of the cooling liquid constituting the cooling bath. The porous structure of the porous polymer membrane can be adjusted by adjusting these compositions.

For example, one surface and the other surface of the porous polymer membrane may have different combinations of the constitution of the composition and the constitution of a cooling liquid. Thereby, the structure of the one surface of the porous polymer membrane may be made different from the structure of the other surface.

In producing the porous polymer membrane of the present invention by nonsolvent-induced phase separation, for example, the porous polymer membrane is preferably produced by a method including a step of dissolving the vinylidene fluoride resin and the copolymer (A) in a solvent to provide a composition, and a step of ejecting the composition into a solidification bath containing a nonsolvent through a die.

Immersion of the composition in a solidification bath containing a nonsolvent can cause nonsolvent-induced phase separation with the concentration gradient between the solvent and nonsolvent in the composition and the solidification bath used as a power for phase separation. In such a method, a fine skin layer is first formed on the outer surface where phase separation occurs due to replacement between the solvent and the nonsolvent. Then, the phase-separating phenomenon proceeds toward the inside of the membrane. As a result, after the formation of the skin layer, an asymmetric membrane can also be produced in which the pore size continually increases toward the inside of the membrane.

In the case of nonsolvent-induced phase separation, the composition preferably comprises the vinylidene fluoride resin, the copolymer (A), and the solvent. The composition further comprising a nonsolvent in addition to the vinylidene fluoride resin, the copolymer (A), and the solvent is also one preferable embodiment.

The composition preferably contains 5 to 60% by mass of the vinylidene fluoride resin and the copolymer (A) relative to the sum of the amounts of the vinylidene fluoride resin, the copolymer (A), the solvent, and the nonsolvent (if the composition contains no nonsolvent, the sum of the amounts of the vinylidene fluoride resin, the copolymer (A), and the solvent). This value is more preferably 10 to 50% by mass.

The composition preferably contains 0.1 to 10% by mass of the nonsolvent relative to the sum of the amounts of the vinylidene fluoride resin, the copolymer (A), the solvent, and the nonsolvent. This value is more preferably 0.5 to 8% by mass.

The viscosity of the composition can be adjusted within an appropriate range by adjusting the fluoropolymer concentration within an appropriate range. If the viscosity of the composition is beyond an appropriate range, a porous polymer membrane may not be formed.

The composition may be at room temperature or may be heated. For example, the composition is preferably at 10°C to 75°C.

The solvent to be used in nonsolvent-induced phase separation may be any solvent exemplified for thermally induced phase separation. The solvent may be either a poor solvent or a good solvent, and is preferably a good solvent.

The nonsolvent may be any nonsolvent exemplified for thermally induced phase separation.

With respect to a solidification liquid to be used as the solidification bath, solidification is preferably achieved using a liquid containing a nonsolvent. The liquid may further contain a poor solvent and a good solvent. The nonsolvent may be any nonsolvent exemplified for thermally induced phase separation. For example, water may suitably be used.

In production of the porous polymer membrane of the present invention, the thermally induced phase separation and the nonsolvent-induced phase separation may be used in combination.

The nonsolvent-induced phase separation and the thermally induced phase separation can provide a porous membrane by ejecting a composition prepared by dissolving the vinylidene fluoride resin and the copolymer (A) in a solvent through a die and solidifying the composition. Examples of the die include slit dies, double orifice spinnerets, and triple orifice spinnerets.

In the case of producing a porous polymer membrane in the form of a hollow fiber membrane, the die to be used is preferably a double orifice spinneret or a triple orifice spinneret for spinning hollow fiber membranes.

In the case of a double orifice spinneret, the composition is emitted from the outer tube of the double orifice spinneret, while a hollow-forming fluid such as ion exchange water is emitted from the inner tube, and then the composition is solidified in a solidification bath or a cooling bath. Thereby, a hollow fiber membrane can be produced.

The hollow-forming fluid is usually in the form of gas or liquid. In thermally induced phase separation, a liquid containing a poor solvent or a good solvent at a concentration of 60 to 100%, which is the same as the cooling liquid, can preferably be used. Alternatively, a nonsolvent or a nonsolvent containing a poor solvent or a good solvent may also be used. In the nonsolvent-induced phase separation, the hollow-forming fluid is preferably the aforementioned nonsolvent. For example, water such as ion exchange water is preferred. The aforementioned nonsolvent may contain a poor solvent or a good solvent.

In thermally induced phase separation, the hollow-forming fluid is preferably the aforementioned solvent. For example, a poor solvent such as glycerol triacetate is preferred. In thermally induced phase separation, nitrogen gas may also be used.

A hollow fiber membrane with two structures may be formed by varying the constitution of a hollow-forming fluid and of a cooling liquid or solidification liquid. The hollow-forming fluid may be supplied in the cooled state. If the cooling force of the cooling bath alone is sufficient for solidifying the hollow fiber membrane, the hollow-forming fluid may be supplied without cooling.

A triple orifice spinneret is suitable for the cases of using two resin solutions. For example, two compositions are emitted from the outer tube and the middle tube, respectively, of the triple orifice spinneret, while a hollow-forming liquid is emitted from the inner tube, and then the compositions are solidified in a solidification bath or a cooling bath. Thereby, a hollow fiber membrane can be formed. Alternatively, a composition is emitted from the outer tube of the triple orifice spinneret, a resin solution containing a resin other than the vinylidene fluoride resin and the copolymer (A) is emitted from the middle tube, and a hollow-forming fluid is emitted from the inner tube, while the emitted materials are solidified in a solidification bath or a cooling bath. Thereby, a hollow fiber membrane can be formed.

The resin other than the vinylidene fluoride resin and the copolymer (A) may be any of those mentioned above. Preferred is the aforementioned thermoplastic resin, and more preferred is acrylic resin.

As mentioned above, production of a hollow fiber membrane by a method using a double orifice spinneret or a triple orifice spinneret is preferred in that the amount of a solidification liquid or a cooling liquid can be smaller than in production of a flat membrane.

The porous polymer membrane of the present invention in the form of a hollow fiber membrane may further have a fluoropolymer layer or a resin layer of a resin other than the vinylidene fluoride resin and the copolymer (A) on the outer surface or the inner surface of the hollow fiber membrane formed by the above method.

The fluoropolymer layer or the resin layer can be formed by applying a composition or a resin solution to the outer surface or the inner surface of the hollow fiber membrane. A method of applying the composition or the resin solution to the outer surface of the hollow fiber membrane is preferably immersing the hollow fiber membrane in the composition or the resin solution or dropping the composition or the resin solution onto the hollow fiber membrane. A method of applying the composition or the resin solution to the inner surface of the hollow fiber membrane is preferably injecting the composition or the resin solution into the hollow fiber membrane.

The amount of the composition or the resin solution to be applied can preferably be controlled by a method of controlling the amount itself of the composition or the resin solution to be applied, as well as a method of partially scraping off or blowing with an air knife the composition or the resin solution after immersing the porous membrane in the composition or the resin solution or applying the composition or the resin solution to the porous membrane, or a method of adjusting the concentration thereof upon application.

The porous polymer membrane of the present invention in the form of a flat membrane can be produced by casting the composition and immersing the composition in a cooling bath or a solidification bath. Alternatively, such a membrane can be produced by ejecting the composition into a cooling bath or a solidification bath through a slit die.

The porous polymer membrane of the present invention in the form of a composite membrane comprising a porous base can be produced by immersing a porous base in the composition or by applying the composition to at least one face of a porous base, for example.

The aforementioned production method can provide a porous polymer membrane having excellent water permeability. Still, if the water permeability is insufficient, the porous membrane produced by the above production method may be further stretched so that the porous polymer membrane of the present invention can be obtained.

The pore size of the porous polymer membrane of the present invention can be controlled by, for example, mixing an additive for controlling the pore size with the composition, and then allowing the additive to be eluted during or after formation of the porous structure of the vinylidene fluoride resin and the copolymer (A). The additive may be made to remain in the porous membrane.

In each of the nonsolvent-induced phase separation and the thermally induced phase separation, the composition may contain an additive. Elution of the additive after formation of the porous structure enables control of the pore size of the porous polymer membrane. The additive may be made to remain in the porous membrane, if necessary.

Examples of the additive include organic compounds and inorganic compounds. The organic compounds are preferably those dissolved or uniformly dispersed in a solvent constituting the composition. They are also preferably those dissolved in a nonsolvent contained in the solidification liquid for nonsolvent-induced phase separation or a solvent contained in the cooling liquid for thermally induced phase separation.

Examples of the organic compounds include water-soluble polymers such as polyvinylpyrrolidone, polyethylene glycol, polyvinyl alcohol, polyethylene imine, polyacrylic acid, and dextran, surfactants such as Tween 40 (polyoxyethylene sorbitan monopalmitate), glycerin, and saccharides.

The inorganic compounds are preferably water-soluble compounds. Examples thereof include calcium chloride, lithium chloride, and barium sulfate.

The average pore size on the surface can also be controlled by controlling the phase separation rate in accordance with the type, concentration, and temperature of a nonsolvent in the solidification liquid without any additive. In general, the higher the phase separation rate is, the smaller the average pore size on the surface is, whereas the lower the rate is, the larger the size is. Addition of a nonsolvent to the composition is also effective to control the phase separation rate.

In order to achieve hydrophilization, to control phase separation, and to improve mechanical strength, the composition may further contain any additives such as polyvinylpyrrolidone, polymethyl methacrylate resin, montmorillonite, $SiO_2$, $TiO_2$, $CaCO_3$, and polytetrafluoroethylene.

In order to improve the water permeability, the porous polymer membrane of the present invention may be treated with an alkali. The alkali herein means a NaOH aqueous solution, a KOH aqueous solution, ammonia water, an amine solution, or the like. They may contain any alcohol such as ethanol and methanol, and organic solvents. The alkali preferably contains an alcohol, but it is not limited thereto.

The porous polymer membrane of the present invention is suited for microfiltration membranes or ultrafiltration membranes to be used in production of drinking water and water treatment such as water-purifying treatment and wastewater treatment. Since the porous polymer membrane of the present invention is high in permeability and excellent in chemical resistance, it is preferably a porous polymer membrane for water treatment.

The porous polymer membrane of the present invention is also suited for the use in such fields as medical treatment, foods, and batteries.

In the field of medical treatment, the porous polymer membrane of the present invention can be used as a blood-purifying membrane intended for blood purification, especially removal of waste products in blood by extracorporeal circulation such as hemodialysis, hemofiltration, or hemodiafiltration in place of kidney function.

In the field of foods, the porous polymer membrane of the present invention can be intended for separation and removal of yeasts used for fermentation and condensation of liquid.

In the field of batteries, the porous polymer membrane of the present invention can be used as a separator which allows an electrolytic solution to pass therethrough but which does not allow products of cell reaction to pass therethrough, or as a base of a solid polymer electrolyte.

The present invention also relates to a hydrophilic agent for porous membranes formed from a vinylidene fluoride resin, the hydrophilic agent comprising a copolymer (A) including a vinyl alcohol unit and a fluoromonomer unit.

The hydrophilic agent of the present invention in an amount of 1 to 30% by mass relative to the vinylidene fluoride resin can lead to a composition. The lower limit of the amount is more preferably 5% by mass, still more preferably 10% by mass, whereas the upper limit thereof is more preferably 25% by mass.

The resulting composition can be formed into a porous polymer membrane by the aforementioned method. Suitable properties such as type, constitution, and alternation rate of the copolymer (A) and suitable properties such as type and constitution of the vinylidene fluoride resin are as mentioned above.

EXAMPLES

The present invention will be described in detail below referring to, but not limited to, the following examples.

The values in the examples were determined as follows. In the following examples, the measurements by X-ray photoelectron spectroscopy (XPS) and by nuclear magnetic resonance (NMR) were performed under the following measurement conditions.

[Surface migration determined by XPS (X-ray photoelectron spectroscopy)]

The composition of the present invention was shaped into a porous membrane, and the surface of the resulting membrane was analyzed by X-ray photoelectron spectroscopy (XPS) as follows.

The measurement was performed with ESCA 3400 (Shimadzu Corp.). The source used was $MgK\alpha$ (1253.6 eV), and the measurement was performed at a measurement area diameter of about 3 mm and a detection depth of about 7 nm (take-off angle: 90°).

In order to eliminate the influence of reagents such as DMAC used in the formation of the membrane, the evaluation was performed as follows.

A porous membrane consisting only of a vinylidene fluoride resin was prepared as a reference. The surface of the resulting membrane was analyzed by XPS so that the number of O atoms (represented by On) and the number of N atoms (represented by Nn) were determined. Then, the correction coefficient α was defined as On/Nn.

Next, the porous membrane comprising a vinylidene fluoride resin and a copolymer (A) of the present invention was produced, and the surface of the resulting membrane was analyzed by XPS. The number of O atoms, the number of N atoms, and the number of F atoms were defined as Ox, Nx, and Fx, respectively. Using the correction coefficient calculated from the results of the reference, the number of O atoms was corrected by the following formula.

$$\mathtt{Oh\ =\ Ox\ -\ \alpha\ \times\ Nx}$$

Using the corrected value Oh, the value of L = O/F was calculated. Based on the value of O/F, the constitution of the copolymer (A) was calculated by the following formula:

$$\mathtt{Constitution\ of\ copolymer\ (A)\ (A_{esca})\ =\ L \cdot FVF/(AO\ -}$$
$$\mathtt{L \cdot (AF\ -\ FVF))}$$

wherein FVF represents the fluorine content (wt%) of the vinylidene fluoride resin, AF represents the fluorine content (wt%) of the copolymer (A), AO represents the oxygen content (wt%) of the copolymer (A), and L = (Oh × 15.999)/(Fx × 18.998).

The evaluation criteria for the surface migration are as follows.

[Evaluation criteria]

The compositional ratio between the vinylidene fluoride resin and the copolymer (A) in the whole membrane was calculated by elemental analysis ($A_{genso}$).

$$\mathtt{Surface\ migration\ =\ (A_{esca}\ -\ A_{genso})/A_{genso}\ \times\ 100}$$

When the surface migration determined by the above formula was 10% or higher, the surface migration was good. When the value was not lower than 5% but lower than 10%, the surface migration was acceptable. When the value was lower than 5%, the surface migration was poor.

[Constitution and alternation rate of fluoropolymer determined by nuclear magnetic resonance (NMR)]

$^1$H-NMR (nuclear magnetic resonance) measurement was performed with JNM-EX 270 (JEOL Ltd., 270 MHz). The solvent used was hexadeuteroacetone.

[Permeation wetting tension]

Water and ethanol were mixed at different ratios, so that aqueous solutions with different surface tensions were prepared. The relationship between the ethanol concentration and the surface tension was found by referring to Kagaku Kogaku Binran (MARUZEN PUBLISHING CO., LTD., 5th revised edition). On each aqueous solution was calmly floated a 5-mm-length sample cut out of a hollow fiber membrane or a 5-mm-square sample cut out of a flat membrane at a temperature of 25°C and a relative humidity of 50%. The maximum surface tension value of the aqueous solution at which the porous membrane sunk 100 mm or deeper from the water surface within one minute was defined as the permeation wetting tension (hereinafter, also referred to as the surface wetting tension) of the porous membrane.

[Wettability]

A mixture (surface tension: 25.0 mN/m) of water (70%) and ethanol (30%) was prepared. On this aqueous solution was calmly floated a 5-mm-length sample cut out of a hollow fiber membrane or a 5-mm-square sample cut out of a flat membrane at a temperature of 25°C and a relative humidity of 50%. The cases where the porous membrane sunk 100 mm or deeper from the water surface within one minute were evaluated as good, the cases where the membrane did not sink at all were evaluated as poor, and the cases therebetween were evaluated as acceptable.

[Coefficient of pure water permeability]

The coefficient of pure water permeability was evaluated by filtering ion exchange water through the produced hollow fiber membrane under a pressure of 0.01 MPa or higher with nitrogen at a temperature of 25°C.

$$\texttt{Coefficient of pure water permeability } [\texttt{m}^3/\texttt{m}^2/\texttt{s}/\texttt{Pa}] =$$
$$\texttt{(amount of water permeated)/(area of membrane)/(time for}$$
$$\texttt{permeation)/(evaluation pressure)}$$
$$[0173]$$

[Particle blocking rate]

The particle blocking rate was determined as follows: polystyrene latex particles having a controlled particle size (100 nm) were diluted to about 100 ppm with ion exchange water, and the resulting dispersed solution was filtered as an evaluation liquid through the membrane. The particle blocking rate was calculated by the following formula.

$$\texttt{Particle blocking rate } [\%] = ((\texttt{absorbance of}$$
$$\texttt{unfiltered evaluation liquid}) - (\texttt{absorbance of liquid}$$
$$\texttt{permeated}))/(\texttt{absorbance of unfiltered evaluation liquid}) \times$$
$$100$$

[Breaking strength at maximum point]

The breaking strength at maximum point was determined by measuring the breaking strength of a test piece at a chuck-to-chuck distance of 25 mm and a tensile rate of 50 mm/min, with the cross-sectional area before the tensile test being used as a unit measurement area.

[Chemical resistance]

A flat membrane was immersed in a 1% by weight sodium hypochlorite aqueous solution at room temperature for one week, and thereby the permeation wetting tension was determined.

[Fouling resistance]

A 50 ppm aqueous solution of humic acid was prepared, and was subjected to external-pressure-type cross-flow filtration at a flow rate of 1 L/h and a pressure of 0.05 MPa for two hours. Then, the permeability after the filtration of the 50 ppm aqueous solution of humic acid and the initial pure water permeability were compared. The humic acid used herein was humic acid available from Wako Pure Chemical Industries, Ltd.

[Molecular weight and molecular weight distribution]

The average molecular weight was calculated from the data obtained by gel permeation chromatography (GPC) using GPC HLC-8020 (TOSOH CORP.), Shodex columns (one GPC KF-801 column, one GPC KF-802 column, and two GPC KF-806M columns connected in series), and tetrahydrofuran (THF) as a solvent at a flow rate of 1 ml/min.
In the cases of samples which were not dissolved in THF, the average molecular weight was calculated as follows. A high-performance liquid chromatograph available from JASCO Corp. was used with a set of analytical columns consisting of one guard column (Shodex GPC KD-G (4.6 mm I.D. $\times$ 10 mm L)) and three analytical columns (KD-806M (8.0 mm I.D. $\times$ 300 mm L). The measurement used N-methyl-2-pyrrolidone containing 10 mM LiBr as a mobile solvent, RI as a detector, and a polystyrene standard sample as a calibration curve sample. The measurement was performed at a flow rate of 1 ml/min with an amount of the sample charged of 200 $\mu$L. The data was analyzed with a data station (ChromNAV).

[Glass transition temperature (Tg)]

With a differential scanning calorimeter (DSC, RTG 220, SEIKO), the temperature was increased (first run), decreased, and increased (second run) within the temperature range from -50°C to 200°C at a rate of 10°C/min. The intermediate point of the absorption curve in the second run was taken as Tg (°C).

[IR analysis]

The IR analysis was performed using a Fourier transform infrared spectrophotometer 1760X (Perkin Elmer Co., Ltd.) at room temperature.

[Fluorine content]

A sample in an amount of 10 mg was burnt by the oxygen flask combustion method, and the gas resulted from decomposition was absorbed by 20 ml of deionized water. The fluoride ion concentration (% by mass) in the absorption liquid was determined by the fluoride-selective electrode method (fluoride ion meter, Orion, type 901).

(Synthesis Example 1)

A 6-L stainless steel autoclave was charged with 1800 g of butyl acetate as a solvent and 51 g of vinyl acetate as a vinyl ester monomer, as well as 3.0 g of PERBUTYL PV (trade name, NOF Corp.) as a polymerization initiator. The flange was tightened and the autoclave was evacuated, and the temperature in the chamber was increased up to 60°C. Thereinto was charged 241 g of tetrafluoroethylene (TFE) as a fluorine olefin gas under stirring, and thereby the reaction was started. The pressure inside the chamber at this time was 0.8 MPa, and the stirring rate was 280 rpm.

Addition of vinyl acetate was started when the reaction started, and 280 g of vinyl acetate was added over six hours. Tetrafluoroethylene was continually supplied through a solenoid valve during the reaction so as to make the vinyl acetate/tetrafluoroethylene ratio constant. The stirring rate was 280 rpm.

Specifically, the solenoid valve automatically opened and tetrafluoroethylene was supplied when tetrafluoroethylene was consumed and the pressure inside the chamber reached 0.775 MPa, while the solenoid valve automatically closed and supply of tetrafluoroethylene was stopped when the pressure reached 0.800 MPa. While controlling the supply of tetrafluoroethylene and the pressure in such a cycle, vinyl acetate was added in accordance with the amount of tetrafluoroethylene consumed.

Six hours from the start of the reaction, the supply of tetrafluoroethylene and vinyl acetate was stopped. Then, the chamber was returned to room temperature and atmospheric pressure and the polymerization was stopped. Thereby, 2770 g (solids content: 28.5% by mass) of a solution of a vinyl acetate/tetrafluoroethylene copolymer in butyl acetate was obtained.

After the reaction was stopped, the polymer solution was reprecipitated in a large amount of methanol solution so that the polymer was purified. Thereby, a polymer A1 was obtained.

The constitution of the polymer A1 was determined on the basis of fluorine elemental analysis. The alternation rate between tetrafluoroethylene and vinyl acetate was calculated on the basis of $^1$H-NMR. The weight average molecular weight and the molecular weight distribution (Mw/Mn) were determined on the basis of GPC. The glass transition temperature was determined on the basis of DSC. Table 1 shows the results.

(Synthesis Example 2)

A 3-L stainless steel autoclave was charged with 1000 g of pure water, 23.2 g of vinyl acetate, and NEOCOL P (a 76.4% by mass solution of dioctyl sodium sulfosuccinate in isopropyl alcohol, DKS Co., Ltd.) and purged with nitrogen. Further, 37 g of tetrafluoroethylene (TFE) was added thereto and the temperature inside the chamber was increased up to 80°C. Thereafter, 30 g of tetrafluoroethylene was added thereto. The pressure inside the chamber at this time reached 0.809 MPa. Thereto was added 22 g of a 1% by mass aqueous solution of ammonium persulfate (APS) under stirring, and thereby the reaction was started. Addition of vinyl acetate was started when the reaction started, and 283 g of vinyl acetate was added over six hours. Tetrafluoroethylene was continually supplied through a solenoid valve during the reaction so as to make the vinyl acetate/tetrafluoroethylene ratio constant. The stirring rate was 500 rpm.

Specifically, the solenoid valve automatically opened and tetrafluoroethylene was supplied when tetrafluoroethylene was consumed and the pressure inside the chamber reached 0.775 MPa, while the solenoid valve automatically closed and supply of tetrafluoroethylene was stopped when the pressure reached 0.800 MPa. While controlling the supply of tetrafluoroethylene and the pressure in such a cycle, vinyl acetate was added in accordance with the amount of tetrafluoroethylene consumed.

Six hours from the start of the reaction, the supply of tetrafluoroethylene and vinyl acetate was stopped. The reaction was further continued for one hour, and then the chamber was returned to room temperature and atmospheric pressure and the polymerization was stopped. Thereby, 1661 g (solids content: 38.5% by mass) of an emulsion of a vinyl acetate/tetrafluoroethylene copolymer was obtained.

For the resulting vinyl acetate/tetrafluoroethylene copolymer (polymer A2), the physical properties of the polymer were determined in the same manner as in Synthesis Example 1. The glass transition temperature of the polymer A2 was 40°C. The particle size thereof was measured using a particle size analyzer UPA 9340 (NIKKISO CO., LTD.) to be 116 nm. Table 1 shows the results of determining the physical properties of the polymer.

(Synthesis Example 3)

A 300-mL stainless steel autoclave was charged with 50 g of butyl acetate as a solvent and 10 g of vinyl acetate as a vinyl ester monomer, as well as 0.4 g of PERBUTYL PV (trade name, NOF Corp.) as a polymerization initiator. The flange was tightened and the autoclave was evacuated, and 17 g of chlorotrifluoroethylene (CTFE) as a fluorine olefin gas was charged thereinto. Then, the autoclave was put into a shaking constant-temperature chamber at 60°C and the reaction was started. Consumption of the gas monomer was confirmed by a reduction in the polymerization pressure. The shaking was stopped four hours later, and the residual gas was blown out so that the reaction was stopped. Thereby, a polymer B2 was obtained.

For the resulting polymer B2, the physical properties of the polymer were determined in the same manner as in Synthesis Example 1. Table 1 shows the results of determining the physical properties of the polymer.

(Synthesis Example 4)

A 300-mL stainless steel autoclave was charged with 50 g of a butyl acetate solvent and 10 g of a vinyl stearate monomer, as well as 0.4 g of PERBUTYL PV (trade name, NOF Corp.) as a polymerization initiator. The flange was tightened and the autoclave was evacuated, and 8.0 g of tetrafluoroethylene (TFE) as a fluorine olefin gas, and then 2.6 g of hexafluoropropylene (HFP) were charged thereinto. The autoclave was put into a shaking constant-temperature chamber at 60°C and the reaction was started. Consumption of the gas monomer was confirmed by a reduction in the polymerization pressure. The shaking was stopped 15 hours later, and the residual gas was blown out so that the reaction was stopped.

After the reaction was stopped, the polymer solution was reprecipitated in a large amount of methanol solution so that the polymer was purified. Thereby, a polymer B1 was obtained.

For the resulting polymer B1, the physical properties of the polymer were determined in the same manner as in Synthesis Example 1. Table 1 shows the results of determining the physical properties of the polymer.

(Synthesis Example 5)

A 3-L stainless steel autoclave was charged with 1200 g of butyl acetate as a solvent and 140 g of vinyl acetate as a vinyl ester monomer, as well as 7.2 g of PERBUTYL PV (trade name, NOF Corp.) as a polymerization initiator. The flange was tightened and the autoclave was evacuated, and the temperature in the chamber was increased up to 60°C. Thereinto was charged 200 g of tetrafluoroethylene (TFE) as a fluorine olefin gas under stirring, and thereby the reaction was started. The pressure inside the chamber at this time reached 1.00 MPa, and the stirring rate was 500 rpm. Consumption of the gas monomer was confirmed by a reduction in the polymerization pressure. Six hours later, the chamber was returned to room temperature and atmospheric pressure and the polymerization was stopped, and then the residual gas was blown out so that the reaction was stopped.

After the reaction was stopped, the polymer solution was reprecipitated in a large amount of methanol solution so that the polymer was purified. Thereby, a polymer A3 was obtained.

For the resulting polymer A3, the physical properties of the polymer were determined in the same manner as in Synthesis Example 1. Table 1 shows the results of determining the physical properties of the polymer.

(Synthesis Example 6: synthesis of t-butyl vinyl ether/tetrafluoroethylene copolymer)

A 300-mL stainless steel autoclave was charged with 150 g of t-butanol, 26.7 g of t-butyl vinyl ether (tBu vinyl ether), and 0.48 g of potassium carbonate, as well as 0.46 g of a 70% isooctane solution of PERBUTYL PV as a catalyst. The flange was tightened and the autoclave was evacuated, and 26.7 g of tetrafluoroethylene was charged thereinto. The autoclave was put into a shaking constant-temperature chamber at 60°C and the reaction was started. Consumption of the gas monomer was confirmed by a reduction in the polymerization pressure. The shaking was stopped three hours later, and the residual gas was blown out so that the reaction was stopped.

After the reaction was stopped, the polymer solution was reprecipitated in a large amount of methanol solution so that the polymer was purified. Thereby, a t-butyl vinyl ether/tetrafluoroethylene copolymer (polymer C1) was obtained.

For the resulting polymer C1, the physical properties of the polymer were determined in the same manner as in Synthesis Example 1. The compositional ratio between the t-butyl vinyl ether unit and the tetrafluoroethylene unit in the polymer C1 was 52/48 (ratio by mole). Table 1 shows the results of determining the physical properties of the polymer.

(Synthesis Example 7)

A 2.5-L stainless steel autoclave was charged with 679 g of ion exchange water and 130 g of a 1% aqueous solution of a dioctyl sodium sulfosuccinate (Tokyo Chemical Industry Co., Ltd.), and then the flange was closed. The chamber was sufficiently purged with nitrogen while the contents of the chamber were gently stirred, and then the autoclave was evacuated to a reduced pressure. Thereafter, 58 g of tetrafluoroethylene (TFE), 5 g of vinyl acetate, and 1 g of a 5% aqueous solution of isopropyl alcohol (IPA) were charged thereinto. The rate of stirring the contents in the chamber was increased to 450 rpm and, in this state, the temperature was increased up to 60°C. The pressure inside the chamber at this time reached 0.82 MPa. A solution of 0.41 g of ammonium persulfate (APS) dissolved in 5 g of ion exchange water was charged into the chamber under pressure with nitrogen, and the reaction was started. After the start of the reaction, TFE and vinyl acetate were added at a constant ratio so as to maintain the pressure inside the chamber at 0.82 MPa. Further, 1 g of a 5% aqueous solution of IPA was continually added per 10 g of TFE until the reaction was finished. Specifically, vinyl acetate was added using a liquid delivery pump in accordance with the consumption of TFE while supplying TFE in such a cycle that the solenoid valve automatically opened and TFE was supplied when TFE was consumed and the pressure inside the chamber reached 0.80 MPa, while the solenoid valve automatically closed and supply of TFE was stopped when the pressure reached 0.82 MPa. The ratio between TFE and vinyl acetate was maintained at 36.4/63.6% by mass. The supply of TFE and vinyl acetate was stopped after 3 hours and 20 minutes from the addition of APS, in other words, after 62 g of TFE and 107 g of vinyl acetate were added. The stirring rate was reduced to 80 rpm, and the chamber was depressurized until the pressure inside the chamber reached 0 MPa. The dispersion of particles of the vinyl acetate/tetrafluoroethylene copolymer put in a plastic container weighed 1092 g, and the solids content thereof was 20.8% by mass.

For the resulting vinyl acetate/tetrafluoroethylene copolymer (polymer A4), the physical properties of the polymer were determined in the same manner as in Synthesis Example 1. The glass transition temperature of the polymer A4 was 38°C. The particle size thereof was measured using a dynamic light-scattering nanotrack particle size analyzer (UPA-EX150, NIKKISO CO., LTD.) to be 50 nm. Table 1 shows the results of determining the physical properties of the polymer.

(Synthesis Example 8)

A 3-L stainless steel autoclave was charged with 815 g of pure water, 19 g of vinyl acetate, and NEOCOL P (a 76.4% by mass solution of dioctyl sodium sulfosuccinate in isopropyl alcohol, DKS Co., Ltd.). The autoclave was purged with nitrogen, and 58 g of tetrafluoroethylene (TFE) was added thereto. The temperature inside the chamber was increased up to 60°C. The pressure inside the chamber at this time reached 0.84 MPa. Thereto was added 41 g of a 1% by mass aqueous solution of ammonium persulfate (APS) and the reaction was started. Addition of vinyl acetate was started when the reaction started, and 10 g of vinyl acetate was added over 24 minutes. Tetrafluoroethylene was continually supplied through a solenoid valve during the reaction so as to make the ratio of vinyl acetate/tetrafluoroethylene constant. The stirring rate was 450 rpm.

Specifically, vinyl acetate was added in accordance with the consumption of TFE while supplying TFE in such a cycle that the solenoid valve automatically opened and TFE was supplied when TFE was consumed and the pressure inside the chamber reached 0.82 MPa, while the solenoid valve automatically closed and supply of TFE was stopped when the pressure reached 0.84 MPa.

After the lapse of 24 minutes from the start of the reaction, the supply of tetrafluoroethylene and vinyl acetate was stopped. Then, the chamber was returned to room temperature and atmospheric pressure and the polymerization was stopped. Thereby, 862 g (solids content: 4.5% by mass) of an emulsion of a vinyl acetate/tetrafluoroethylene copolymer was obtained.

For the resulting vinyl acetate/tetrafluoroethylene copolymer (polymer A5), the physical properties of the polymer were determined in the same manner as in Synthesis Example 1. The glass transition temperature of the polymer A5 was 35°C. The particle size thereof was determined using a particle size analyzer UPA 9340 (NIKKISO CO., LTD.) to be 68 nm. Table 1 shows the results of determining the physical properties of the polymer.

[Table 1]

| | Polymer | Constitution (ratio by mole) | H-NMR alternation rate (%) | Weight average molecular weight | Mw/Mn | Tg (°C) | Yield (%) |
|---|---|---|---|---|---|---|---|
| Synthesis Example 1 | A1 | TFE/vinyl acetate | 54/46 | 74 | 41,000 | 1.27 | 19 | 75.2 |
| Synthesis.Example 2 | A2 | TFE/vinyl acetate | 49/51 | 70 | 538,000 | 4.30 | 40 | 72.4 |
| Synthesis Example 3 | B2 | CTFE/vinyl acetate | 53/47 | 72 | 42,000 | 3.52 | 42 | 33.1 |
| Synthesis Example 4 | B1 | TFE/HFP/vinyl stearate | 48/13/39 | 51 | 80,000 | 4.61 | 39 (Tm) | 98.0 |
| Synthesis Example 5 | A3 | TFE/vinyl acetate | 43/57 | 40 | 42,000 | 2.06 | 28 | 73.1 |
| Synthesis Example 6 | C1 | TFE/t-butyl vinyl ether | 48/52 | 95 | 19,000 | 1.39 | 32 | 62.5 |
| Synthesis Example 7 | A4 | TFE/vinyl acetate | 37/63 | 25 | 290,000 | 3.26 | 38 | 98.0 |
| Synthesis Example 8 | A5 | TFE/vinyl acetate | 31/69 | 20 | 330,000 | 3.38 | 35 | 39.0 |

(Synthesis Example 9)

The TFE/vinyl acetate polymer (polymer A1) obtained in Synthesis Example 1 was uniformly dissolved in 10 g of a tetrahydrofuran (THF) solvent so as to be a concentration of 10% by mass. Then, a 0.6 N NaOH solution was added in an amount equivalent to that of the vinyl acetate in the polymer and the mixture was stirred for 24 hours at room temperature. Thereafter, the polymer was reprecipitated in a large amount of water. The reprecipitated polymer was washed with 1 N HCl, and then well washed with ion exchange water. The reprecipitated polymer was subsequently suction-filtered and dried using a dryer at 80°C for two hours. Thereby, a TFE/vinyl alcohol/vinyl acetate polymer (A1-98) was obtained whose hydrolysis rate calculated from the relative intensity of the carbonyl peak in IR was 98%. Table 2 shows the results.

(Synthesis Example 10)

The emulsion of the vinyl acetate/tetrafluoroethylene copolymer obtained in Synthesis Example 2 was freeze-coagulated, washed with pure water, and then dried to provide a TFE/vinyl acetate polymer (polymer A2). This polymer was uniformly dissolved in 10 g of a THF solvent so as to be a concentration of 10% by mass. Then, a 0.6 N NaOH solution was added in an amount equivalent to that of the vinyl acetate in the polymer and the mixture was stirred for 24 hours. The mixture was neutralized with 1 N HCl, and reprecipitated in a large amount of pure water. The reprecipitated polymer was well washed with ion exchange water, suction-filtered, and dried using a dryer at 80°C for two hours. Thereby, a TFE/vinyl alcohol/vinyl acetate polymer (A2-96) was obtained whose hydrolysis rate calculated from the relative intensity of the carbonyl peak in IR was 96%. Table 2 shows the results.

(Synthesis Examples 11 to 13)

Saponified polymers A3-96, B1-97, and B2-96 were obtained in the same manner as in Synthesis Example 10 except that the polymers obtained in Synthesis Examples 3 to 5 were used. Table 2 shows the results.

(Synthesis Example 14: synthesis of vinyl alcohol/tetrafluoroethylene copolymer)

A 100-ml recovery flask was charged with 2.63 g of the t-butyl vinyl ether/tetrafluoroethylene copolymer (polymer C1: t-butyl vinyl ether/tetrafluoroethylene = 52/48 (ratio by mole)) obtained in Synthesis Example 6, 1.2 mL of 1,4-dioxane, and 50 mL of a 4 N HCl aqueous solution. The contents were stirred under heating at 80°C. Two hours later, the heating was stopped and the contents were cooled down. The precipitated polymer was washed with pure water three times. The polymer was dissolved in THF, reprecipitated in a solution of ethanol/water (50/50% by volume), and vacuum-dried. Thereby, a purified vinyl alcohol/tetrafluoroethylene copolymer (C1-95) was obtained. The deprotection rate was calculated from the integral of protons derived from the protecting groups and the integral of protons derived from the methylene groups in the main chain each determined by H-NMR before and after the deprotection, and the rate was 95%. The alternation rate was 95%. Table 2 shows the results.

(Synthesis Example 15)

The emulsion of the vinyl acetate/tetrafluoroethylene copolymer obtained in Synthesis Example 7 was freeze-cogulated, washed with pure water, and then dried to provide a TFE/vinyl acetate polymer (polymer A4). This polymer was uniformly dispersed in 10 g of a methanol solvent so as to be a concentration of 10% by mass. Then, a 0.6 N NaOH solution was added in an amount of 0.6 equivalents to the vinyl acetate in the polymer, and the mixture was stirred for six hours. The mixture was neutralized with 1 N HCl, and reprecipitated in a large amount of pure water. The reprecipitated polymer was well washed with ion exchange water, suction-filtered, and dried using a dryer at 45°C for 24 hours. Thereby, a TFE/vinyl alcohol/vinyl acetate polymer (A4-98) was obtained whose hydrolysis rate calculated from the relative intensity of the carbonyl peak in IR was 98%. Table 2 shows the results.

(Synthesis Example 16)

The TFE/vinyl acetate polymer (polymer A5) obtained in Synthesis Example 8 was hydrolyzed in the same manner as in Synthesis Example 14, and thereby a TFE/vinyl alcohol/vinyl acetate polymer was obtained. Table 2 shows the results.

[Table 2]

|  | Polymer before hydrolysis | Time | Degree of saponification (%) | Name of polymer after hydrolysis |
|---|---|---|---|---|
| Synthesis Example 9 | A1 | 1 day | 98 | A1-98 |
| Synthesis Example 10 | A2 | 1 day | 96 | A2-96 |
| Synthesis Example 11 | A3 | 1 day | 96 | A3-96 |
| Synthesis Example 12 | B1 | 1 day | 97 | B1-97 |
| Synthesis Example 13 | B2 | 1 day | 96 | B2-96 |
| Synthesis Example 14 | C1 | 120 min | 95 (deprotection rate) | C1-95 |
| Synthesis Example 15 | A4 | 6h | 98 | A4-98 |
| Synthesis Example 16 | A5 | 5h | 98 | A5-98 |

(Synthesis Example 17: synthesis example of polyvinylidene fluoride (PVdF))

A 2-L SUS autoclave was charged with 910 g of ion exchange water and 0.5 g of methyl cellulose, and then purged with nitrogen and evacuated. The autoclave was further charged with 1.5 g of ethyl acetate and 365 g of 1,1-difluoroethylene (vinylidene fluoride (VdF)), and the temperature was kept at 28°C. After the temperature in the chamber was kept constant, 12 g of di-normal-propyl peroxydicarbonate was added thereto and the suspension polymerization was started. After the lapse of 10 hours, the pressure inside the chamber was released and the reaction was finished. The resulting polymer in the form of slurry was dehydrated, washed with water, and dried at 105°C for 24 hours. Thereby, a polyvinylidene fluoride polymer in the form of powder was obtained. The resulting powdery polymer weighed 110 g and had a weight average molecular weight of 270000.

(Synthesis Example 18: synthesis example of VdF/TFE copolymer)

A 4-L glass-lined autoclave was charged with 1300 g of ion exchange water, and then purged with nitrogen and evacuated. The autoclave was further charged with 1300 g of octafluorocyclobutane. The temperature inside the chamber was increased up to 45°C, and the contents were stirred at a stirring rate of 580 rpm. After the temperature in the chamber was kept constant, 150 g of a gas mixture of tetrafluoroethylene (TFE)/1,1-difluoroethylene (VdF) = 6/94 mol% and 10 g of ethyl acetate were added thereto, and then 2 g of a 50% by mass solution of di-normal-propyl peroxydicarbonate in methanol was added thereto, so that the suspension polymerization was started. A gas mixture of TFE/VdF = 20/80 mol% was continually supplied from the start of the reaction, and the pressure inside the chamber was maintained at 1.3 MPa. The stirring rate was maintained at 580 rpm.

After the lapse of 24 hours from the start of the reaction, the chamber was depressurized and the reaction was finished. The reaction product was washed with water, and then dried at 120°C for 12 hours. Thereby, a VdF/TFE copolymer in the form of powder was obtained. The resulting powdery polymer weighed 600 g, had a weight average molecular weight of 230000, and a compositional ratio of VdF/TFE = 80/20 (mol%).

(Example 1)

A polymer solution was prepared containing 18.0% by mass of a blend of the polyvinylidene fluoride obtained in Synthesis Example 17 and the vinyl alcohol/tetrafluoroethylene copolymer (A1-98) obtained in Synthesis Example 9 at a weight ratio of 90:10 and 82.0% by mass of dimethyl acetamide.

This polymer solution was applied to a glass plate using an applicator (203 $\mu$m). Immediately thereafter, the workpiece was immersed in a 25°C water solidification bath for 10 minutes. Thereby, a porous flat membrane was obtained. The resulting porous membrane was subjected to measurement of the permeation wetting tension and evaluation of the wettability. The permeation wetting tension was 28.0 mN/m and the wettability was evaluated as good, so that the hydrophilization was sufficiently achieved. The surface migration was evaluated by ESCA, and the value was found to be not lower than 10%, i.e., evaluated as good. This presumably proves that the added vinyl alcohol/tetrafluoroethylene copolymer (A1-98) migrated to the surface and gave hydrophilicity. Table 3 shows the results.

(Example 2)

A porous flat membrane was obtained in the same manner as in Example 1 using a blend of polyvinylidene fluoride and the vinyl alcohol/tetrafluoroethylene copolymer (A1-98) obtained in Synthesis Example 9 at a weight ratio of 75:25. The surface wetting tension, the wettability, and the surface migration were evaluated in the same manner as in Example 1. The value was found to be not lower than 10%, i.e., evaluated as good. Table 3 shows the results.

(Comparative Example 1)

A porous flat membrane consisting only of polyvinylidene fluoride was obtained in the same manner as in Example 1. The surface wetting tension and the wettability were evaluated in the same manner as in Example 1. Table 3 shows the results.

(Example 3)

A porous flat membrane was obtained in the same manner as in Example 1 except that the polyvinylidene fluoride was replaced by the VdF/TFE copolymer obtained in Synthesis Example 18. The surface wetting tension, the wettability, and the surface migration were evaluated in the same manner as in Example 1. Table 3 shows the results.

(Examples 4 and 5)

A porous flat membrane was obtained in the same manner as in Example 3 using a blend of a VdF/TFE copolymer and the vinyl alcohol/tetrafluoroethylene copolymer (A1-98) obtained in Synthesis Example 9 at a weight ratio of 75:25 or 95:5. The surface wetting tension, the wettability, and the surface migration were evaluated in the same manner as in Example 1. Table 3 shows the results.

(Examples 6 to 12)

A porous flat membrane was obtained in the same manner as in Example 2 except for using a blend of polyvinylidene fluoride and the saponified polymer obtained in one of Synthesis Examples 10 to 16 at a weight ratio of 75:25. The wettability was evaluated in the same manner as in Example 1. Table 3 shows the results.

(Example 13)

A porous flat membrane was obtained in the same manner as in Example 1 using a blend of polyvinylidene fluoride and the vinyl alcohol/tetrafluoroethylene copolymer (A4-98) obtained in Synthesis Example 15 at a weight ratio of 90:10. The wettability was evaluated in the same manner as in Example 1. Table 3 shows the results.

(Example 14)

A polymer solution was obtained by mixing, at 25°C, 5% by mass of the polyvinyl alcohol/tetrafluoroethylene copolymer (A1-98) obtained in Synthesis Example 9, 15% by mass of the polyvinylidene fluoride obtained in Synthesis Example 17 (polyvinylidene fluoride:polyvinyl alcohol/tetrafluoroethylene copolymer = 75:25), and 78.5% by mass of dimethyl acetamide. This polymer solution was ejected through a double-tube spinneret accompanied by ion exchange water as an internal liquid, and the ejected polymer was solidified in the ion exchange water. The resulting hollow fiber membrane had an outer diameter of 0.87 mm and an inner diameter of 0.75 mm. The wettability was evaluated in the same manner as in Example 1. Table 3 shows the results.

(Example 15)

A hollow fiber membrane was obtained in the same manner as in Example 11 except that the polyvinyl alcohol/tetrafluoroethylene copolymer (C1-95) obtained in Synthesis Example 14 was used. The resulting hollow fiber membrane had an outer diameter of 0.92 mm and an inner diameter of 0.78 mm. The wettability was evaluated in the same manner as in Example 1. Table 3 shows the results.

[Table 3]

| | Type of membrane | Vinylidene fluoride resin | | Copolymer A | | Surface wetting tension | Wettability | Surface migration |
|---|---|---|---|---|---|---|---|---|
| | | Polymer | Proportion | Polymer | Proportion | (mN/m) | | |
| Example 1 | Flat | PVDF | 90 | A1-98 | 10 | 28.0 | Good | Good |
| Example 2 | Flat | PVDF | 75 | A1-98 | 25 | 28.0 | Good | Good |
| Comparative Example 1 | Flat | PVDF | 100 | - | 0 | 23.8 | Poor | - - |
| Examples 3 | Flat | VdF/TFE copolymer | 90 | A1-98 | 10 | 27.1 | Good | Good |
| Example 4 | Flat | VdF/TFE copolymer | 75 | A1-98 | 25 | 26.2 | Good | Good |
| Example 5 | Flat | VdF/TFE copolymer | 95 | A1-98 | 5 | 29.1 | Good | Good |
| Example 6 | Flat | PVDF | 75 | A2-96 | 25 | - | Good | - |
| Example 7 | Flat | PVDF | 75 | A3-96 | 25 | - | Good | - |
| Example 8 | Flat | PVDF | 75 | B1-97 | 25 | - | Good | - |
| Example 9 | Flat | PVDF | 75 | B2-96 | 25 | - | Good | - |
| Example 10 | Flat | PVDF | 75 | C1-95 | 25 | - | Good | - |
| Example 11 | Flat | PVDF | 75 | A4-98 | 25 | - | Good | - |
| Example 12 | Flat | PVDF | 75 | A5-98 | 25 | - | Good | - |
| Example 13 | Flat | PVDF | 90 | A4-98 | 10 | - | Good | - |
| Example 14 | Hollow fiber | PVDF | 75 | A1-98 | 25 | - | Good | - |
| Example 15 | Hollow fiber | PVDF | 75 | C1-95 | 25 | - | Good | - |

(Example 16)

For the flat membrane obtained in Example 1, the breaking strength, the coefficient of pure water permeability (water permeability), and the particle blocking rate were determined. Table 4 shows the results.

(Comparative Example 2)

A polymer solution was prepared containing 18.0% by mass of the polyvinylidene fluoride obtained in Synthesis Example 17, 79.7% by mass of dimethyl acetamide, and 2.3% by mass of Tween 40.
This polymer solution was applied to a glass plate using an applicator (203 $\mu$m). Immediately thereafter, the workpiece was immersed in a 25°C water solidification bath for 10 minutes. Thereby, a porous flat membrane was obtained. For the resulting flat membrane, the breaking strength, the coefficient of pure water permeability (water permeability), and the particle blocking rate were determined. Table 4 shows the results.

(Example 17)

For the flat membranes obtained in Examples 3 to 5 and Examples 11 and 13, the breaking strength, the coefficient of pure water permeability (water permeability), and the particle blocking rate were determined. Table 4 shows the results.

(Comparative Example 3)

A porous flat membrane was obtained in the same manner as in Comparative Example 2 except that the polyvinylidene fluoride was replaced by the VdF/TFE copolymer obtained in Synthesis Example 18. For the resulting flat membrane, the breaking strength, the coefficient of pure water permeability (water permeability), and the particle blocking rate were determined. Table 4 shows the results.

[Table 4]

| | Type of porous membrane | | Vinylidene fluoride resin | | Copolymer A | | Breaking strength | Coefficient of pure water permeability | Particle blocking rate |
|---|---|---|---|---|---|---|---|---|---|
| | | | Polymer | Proportion | Polymer | Proportion | (MPa) | $(m^3/m^2/s/Pa)$ | (%) |
| Example 16 | Example 1 | Flat | PVDF | 90 | A1-98 | 10 | 1.65 | $5.39 \times 10^{-10}$ | 98.5 |
| Comparative Example 2 | | Flat | PVDF | 100 | - | 0 | 0.94 | $2.86 \times 10^{-10}$ | 98.9 |
| Example 17 | Example 3 | Flat | VdF/TFE copolymer | 90 | A1-98 | 10 | 3.62 | $3.14 \times 10^{-10}$ | 98.8 |
| | Example 4 | Flat | VdF/TFE copolymer | 75 | A1-98 | 25 | 3.27 | $9.13 \times 10^{-10}$ | 97.0 |
| | Example 5 | Flat | VdF/TFE copolymer | 95 | A1-98 | 5 | 3.73 | $1.80 \times 10^{-10}$ | 99.2 |
| | Example 11 | Flat | PVDF | 75 | A4-98 | 25 | 1.90 | $5.01 \times 10^{-9}$ | 99.2 |
| | Example 13 | Flat | PVDF | 90 | A4-98 | 10 | 2.40 | $1.39 \times 10^{-9}$ | 99.0 |
| Comparative Example 3 | | Flat | VdF/TFE copolymer | 100 | - | 0 | 1.62 | $1.06 \times 10^{-10}$ | 99.3 |

(Example 18)

For the flat membrane obtained in Example 1, the chemical resistance (in a 1% by weight sodium hypochlorite aqueous solution) was evaluated. Table 5 shows the results.

(Comparative Example 4)

A polymer solution was prepared containing 18.0% by mass of a blend of the polyvinylidene fluoride obtained in Synthesis Example 13 and polyvinylpyrrolidone (PVP) (K-25, reagent, Wako Pure Chemical Industries, Ltd., average molecular weight: 35,000) at a weight ratio of 75:25 and 82.0% by mass of dimethyl acetamide.

This polymer solution was applied to a glass plate using an applicator (203 $\mu$m). Immediately thereafter, the workpiece was immersed in a 25°C water solidification bath for 10 minutes. Thereby, a porous flat membrane was obtained.

The chemical resistance was evaluated in the same manner as in Example 18. Table 5 shows the results.

[Table 5]

|  | Initial | 2 days | 5 days | 7 days |
|---|---|---|---|---|
| Example 18 | 28.0 | 31.6 | 33.0 | 29.1 |
| Comparative Example 4 | 29.1 | 26.2 | 26.2 | 25.6 |
| (unit: mN/m) | | | | |

(Example 19)

The fouling resistance of the flat membranes was evaluated. The evaluation found that the amount of water permeated was greatly decreased in the PVDF single membrane obtained in Comparative Example 1, whereas the degree of decrease in the amount of water permeated of the flat membrane obtained in Example 13 was clearly suppressed.

This means that the fouling resistance was achieved.

(Example 20: measurement of contact angle in water)

For the flat membranes obtained in Examples 11 and 13, the contact angle in water was measured.

This contact angle measurement was performed by bringing a bubble into contact with the flat membrane in water and measuring the contact angle of the bubble with the membrane (captive bubble method). The measurement was performed as follows: with a static contact angle meter (trade name: Drop Master 701, Kyowa Interface Science Co., LTD.), a 2-$\mu$L bubble was brought into contact with the surface in water at room temperature and atmospheric pressure, and the contact angle therebetween was measured. The measurement was performed with the membrane immersed in water for four hours. Table 6 shows the results.

(Example 21)

For the flat membranes obtained in Examples 11 and 13, the chemical resistance (in a 5000 ppm sodium hypochlorite aqueous solution) of the contact angle in water was evaluated. Specifically, the flat membrane was immersed in a 5000 ppm sodium hypochlorite aqueous solution at room temperature for one week, and then the contact angle in water was measured. The cases where the contact angle in water after one-week immersion was 60° or lower were evaluated as good, the cases where such a contact angle was higher than 60° but not higher than 70° were evaluated as acceptable, and the cases where such a contact angle was higher than 70° were evaluated as poor. Table 7 shows the results.

(Comparative Example 5)

For the flat membrane obtained in Comparative Example 3, the contact angle in water was measured in the same manner as in Example 20. The measured value was 74.3°.

(Comparative Example 6)

For the flat membrane obtained in Comparative Example 3, the chemical resistance of the contact angle in water was evaluated in the same manner as in Example 21. Table 7 shows the results.

[Table 6]

|  | Example 20 |
| --- | --- |
| Example 11 | 37.7 |
| Example 13 | 39.9 |

[Table 7]

|  | Example 21 |
| --- | --- |
| Example 11 | Good |
| Example 13 | Good |
| Comparative Example 6 | Poor |

(Example 22)

In order to evaluate the effect of the resulting flat membrane to suppress protein adsorption, the weight of a protein adsorbed to the saponified polymer itself was evaluated using Quartz crystal microbalance (QCM; QCM-D, MEIWAFOSIS CO., LTD.).

The polymer (A4-98) obtained in Synthesis Example 15 was diluted to 1% by mass with a DMAC solution, and the solution was spin-coated on a quartz crystal substrate at room temperature and 2000 rpm for 30 seconds. The solution was dried at 80°C for 30 minutes, and thereby a quartz crystal substrate coated with A4-98 was prepared. This substrate was stabilized in a phosphate buffer (pH 7.0) at 25°C, and 100 ppm of bovine serum albumin (BSA) was added thereto. The frequency of the crystal unit varied in response to the addition of the BSA was measured and converted into the amount of adsorbate. This amount was taken as the amount of BSA adsorbed to the polymer A4-98.

The resulting value was 3.4 mg/m$^2$.

(Comparative Example 7)

The amount of BSA adsorbed to the polyvinylidene fluoride was evaluated in the same manner as in Example 22 except that the polymer A4-98 was replaced by the polyvinylidene fluoride obtained in Synthesis Example 17.

The resulting value was 4.8 mg/m$^2$.

The aforementioned results clearly show that the polymer A4-98 obviously suppress the adsorption of BSA.

**Claims**

1.   A composition comprising
a vinylidene fluoride resin, and
a copolymer (A) including a vinyl alcohol unit and a fluoromonomer unit.

2.   The composition according to claim 1,
wherein the copolymer (A) satisfies a ratio by mole between the vinyl alcohol unit and the fluoromonomer unit (vinyl alcohol unit/fluoromonomer unit) of 25 to 75/75 to 25.

3.   The composition according to claim 1 or 2,
wherein a ratio by mass between the vinylidene fluoride resin and the copolymer (A) is 70/30 to 99/1.

4.   A porous polymer membrane comprising the composition according to claim 1, 2, or 3.

5.   The porous polymer membrane according to claim 4, which is produced by nonsolvent-induced phase separation, thermally induced phase separation, or combination of both.

6. The porous polymer membrane according to claim 4 or 5, which is a flat membrane or a hollow fiber membrane.

7. The porous polymer membrane according to claim 4, 5, or 6, which is intended to be used in water treatment.

8. A hydrophilic agent for a porous membrane that is formed from a vinylidene fluoride resin, the hydrophilic agent comprising:

a copolymer (A) including a vinyl alcohol unit and a fluoromonomer unit.

## INTERNATIONAL SEARCH REPORT

| International application No. |
| --- |
| PCT/JP2014/066827 |

| A. CLASSIFICATION OF SUBJECT MATTER |
| --- |
| $C08L27/16$(2006.01)i, $B01D69/06$(2006.01)i, $B01D69/08$(2006.01)i, $B01D71/34$ (2006.01)i, $B01D71/38$(2006.01)i, $C08J9/28$(2006.01)i, $C08L27/18$(2006.01)i, $C08L29/04$(2006.01)i |
| According to International Patent Classification (IPC) or to both national classification and IPC |

| B. FIELDS SEARCHED |
| --- |
| Minimum documentation searched (classification system followed by classification symbols) |
| C08L27/16, B01D69/06, B01D69/08, B01D71/34, B01D71/38, C08J9/28, C08L27/18, C08L29/04 |

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| X | JP 4-139237 A (Japan Gore-Tex Inc.), 13 May 1992 (13.05.1992), claims; paragraphs [0009], [0015]; examples & JP 5-301033 A  & JP 5-301991 A & JP 6-24742 U  & US 5130024 A & US 5445739 A  & US 5188890 A & EP 456939 A1  & EP 498348 A1 & EP 503147 A1  & DE 69017197 C & DE 69201890 C  & DE 69102991 C | 1-8 |
| X | JP 6-001876 A (Japan Gore-Tex Inc.), 11 January 1994 (11.01.1994), claims; paragraph [0005]; examples (Family: none) | 1-8 |

| ☒ Further documents are listed in the continuation of Box C. | ☐ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 23 July, 2014 (23.07.14) | 09 September, 2014 (09.09.14) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2014/066827

C (Continuation). DOCUMENTS CONSIDERED TO BE RELEVANT

| Category* | Citation of document, with indication, where appropriate, of the relevant passages | Relevant to claim No. |
|---|---|---|
| X | JP 9-504994 A (W.L. Gore & Associates, Inc.), 20 May 1997 (20.05.1997), claims; page 5, lines 5 to 29; examples<br>& US 5354587 A  & EP 729379 A1<br>& WO 1995/013858 A1  & DE 69409824 C<br>& AU 6548794 A  & CN 1135188 A | 1-8 |
| X | JP 9-504995 A (W.L. Gore & Associates, Inc.), 20 May 1997 (20.05.1997), claims; page 5, line 10 to page 6, line 4; examples<br>& US 5352511 A  & EP 729380 A1<br>& WO 1995/013859 A1  & DE 69411582 C<br>& AU 6781794 A  & CN 1135187 A | 1-8 |
| X | WO 2012/165503 A1 (Asahi Glass Co., Ltd.), 06 December 2012 (06.12.2012), claims; paragraph [0064]; examples (Family: none) | 1-8 |
| P,X | WO 2013/099966 A1 (Daikin Industries, Ltd.), 04 July 2013 (04.07.2013), claims; examples<br>& JP 2013-151671 A  & TW 201341046 A | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008018181 A
- WO 2009119373 A

- WO 2010032808 A

**Non-patent literature cited in the description**

- Kagaku Kogaku Binran. MARUZEN PUBLISHING CO., LTD,